# EUROPEAN PATENT APPLICATION

(11) **EP 4 841 413 A1**
(43) Date of publication of application: **18.11.2026**
(21) Application number: 25848592.9
(22) Date of filing: 24.04.2025
(51) Int. Cl.: G06F 3/0484, G06F 1/16, G06F 3/0481, G06F 3/01, G06F 3/00, G06V 40/18

(54) **ELECTRONIC DEVICE, METHOD, AND NON-TRANSITORY COMPUTER-READABLE STORAGE MEDIUM FOR INTERACTING WITH WEARABLE DEVICE**

(30) Priority: 02.08.2024 KR 20240102948; 11.09.2024 KR 20240124300
(71) Applicant: Samsung Electronics Co., Ltd., Suwon-si, Gyeonggi-do 16677 (KR)
(72) Inventor: WOO, Kwangtaek, Suwon-si Gyeonggi-do 16677 (KR); AN, Jinwan, Suwon-si Gyeonggi-do 16677 (KR)
(74) Representative: Gulde & Partner
(86) International application number: PCT/KR2025/005586
(87) International publication number: WO 2026/029319

(57) **Abstract**

An electronic device disclosed herein may display a first screen through the display and establish a communication connection with a wearable device, worn by a user, through the communication circuit. The wearable device may include displays arranged facing the two eyes of the user when the user is wearing the wearable device. The electronic device may transmit data related to a mirror screen corresponding to a first screen to the wearable device through the communication circuit so that the mirror screen corresponding to the first screen is displayed through the displays of the wearable device while the communication connection is established. The electronic device may recognize the approach of another user, distinguishable from the user, while the mirror screen corresponding to the first screen is displayed on the wearable device. The electronic device may display a second screen, indicating that the user is using the electronic device, through the display on the basis of identifying the approach of the other user.

## Description

### [Technical Field]

The following descriptions relate to an electronic device, a method, and a non-transitory computer readable storage medium that interact with a wearable device.

### [Background Art]

In order to provide an enhanced user experience, an electronic device that provides an augmented reality (AR) service displaying information generated by a computer in connection with an external object in the real-world is being developed. The electronic device may be a wearable device that may be worn by a user. For example, the electronic device may be AR glasses and/or a head-mounted device (HMD). A display of the electronic device may display a screen of an external electronic device.

### [Disclosure]

### [Technical Solution]

An electronic device is disclosed. The electronic device may comprise communication circuitry, a display, at least one processor comprising processing circuitry, and memory, comprising one or more storage mediums, storing instructions. The instructions, when executed by the at least one processor individually or collectively, may cause the electronic device to display, via the display, a first screen. The instructions, when executed by the at least one processor individually or collectively, may cause the electronic device to establish, via the communication circuitry, a communication connection with a wearable device worn by a user. The wearable device may comprise displays arranged toward eyes of the user when worn by the user. The instructions, when executed by the at least one processor individually or collectively, may cause the electronic device to, during the communication connection, transmit, to the wearable device via the communication circuitry, data associated with a mirror screen corresponding to the first screen, such that the mirror screen corresponding to the first screen is displayed via the displays of the wearable device. The instructions, when executed by the at least one processor individually or collectively, may cause the electronic device to identify an approach of another user different from the user while the mirror screen corresponding to the first screen is displayed from the wearable device. The instructions, when executed by the at least one processor individually or collectively, may cause the electronic device to, based on identifying the approach of the another user, display, via the display, a second screen indicating that the user is using the electronic device.

A method is disclosed. The method may be performed by an electronic device including communication circuitry and a display. The method may comprise displaying, via the display, a first screen. The method may comprise establishing, via the communication circuitry, a communication connection with a wearable device worn by a user. The wearable device may comprise displays arranged toward eyes of the user when worn by the user. The method may comprise, during the communication connection, transmitting, to the wearable device via the communication circuitry, data associated with a mirror screen corresponding to the first screen, such that the mirror screen corresponding to the first screen is displayed via the displays of the wearable device. The method may comprise identifying an approach of another user different from the user while the mirror screen corresponding to the first screen is displayed from the wearable device. The method may comprise, based on identifying the approach of the another user, displaying, via the display, a second screen indicating that the user is using the electronic device.

A non-transitory computer readable storage medium is disclosed. The non-transitory computer readable storage medium may store a program including instructions. The instructions, when executed by at least one processor of an electronic device including a display and communication circuitry, individually or collectively, may cause the electronic device to display, via the display, a first screen. The instructions, when executed by the at least one processor individually or collectively, may cause the electronic device to establish, via the communication circuitry, a communication connection with a wearable device worn by a user. The wearable device may comprise displays arranged toward eyes of the user when worn by the user. The instructions, when executed by the at least one processor individually or collectively, may cause the electronic device to, during the communication connection, transmit, to the wearable device via the communication circuitry, data associated with a mirror screen corresponding to the first screen, such that the mirror screen corresponding to the first screen is displayed via the displays of the wearable device. The instructions, when executed by the at least one processor individually or collectively, may cause the electronic device to identify an approach of another user different from the user while the mirror screen corresponding to the first screen is displayed from the wearable device. The instructions, when executed by the at least one processor individually or collectively, may cause the electronic device to, based on identifying the approach of the another user, display, via the display, a second screen indicating that the user is using the electronic device.

### [Description of the Drawings]

FIG. 1 is a block diagram of an electronic device in a network environment according to various embodiments.
FIG. 2A illustrates an example of a perspective view of a wearable device according to an embodiment.
FIG. 2B illustrates an example of one or more hardware disposed in a wearable device according to an embodiment.
FIG. 3A illustrates an example of an exterior of a wearable device according to an embodiment.
FIG. 3B illustrates an example of an exterior of a wearable device according to an embodiment.
FIG. 4 illustrates an example of a block diagram of an electronic device according to an embodiment.
FIG. 5A illustrates a situation in which a user wearing an electronic device approaches an external electronic device in an embodiment.
FIG. 5B illustrates an example of a field of view (FoV) of an electronic device in an embodiment.
FIG. 5C illustrates an example of a screen displayed on an external electronic device during a communication connection between an electronic device and the external electronic device in an embodiment.
FIG. 5D illustrates an example of a screen displayed on an external electronic device during a communication connection between an electronic device and the external electronic device in an embodiment.
FIG. 6A illustrates a situation in which another user approaches an external electronic device during a communication connection between an electronic device and the external electronic device in an embodiment.
FIG. 6B illustrates an example of a screen displayed by an external electronic device according to an approach of another user during a communication connection between an electronic device and the external electronic device in an embodiment.
FIG. 6C illustrates an example of a screen displayed by an electronic device according to an approach of another user during a communication connection between an electronic device and the external electronic device in an embodiment.
FIG. 7A illustrates a situation in which another user uses an external electronic device during a communication connection between an electronic device and the external electronic device in an embodiment.
FIG. 7B illustrates a situation in which another user uses an external electronic device during a communication connection between an electronic device and the external electronic device in an embodiment.
FIG. 7C illustrates a situation in which another user uses an external electronic device during a communication connection between an electronic device and the external electronic device in an embodiment.
FIG. 8 is a flowchart illustrating an operation of an electronic device according to an embodiment.
FIG. 9 is a flowchart illustrating an operation of an external electronic device according to an embodiment.
FIG. 10A illustrates a situation in which another electronic device displays a user interface (UI) for a communication connection to an external electronic device in an embodiment.
FIG. 10B illustrates a situation in which an electronic device and another electronic device are in a communication connection with an external electronic device in an embodiment.
FIG. 10C illustrates a situation in which an electronic device and another electronic device are in a communication connection with an external electronic device in an embodiment.
FIG. 11A illustrates a situation in which a user uses an external electronic device in an embodiment.
FIG. 11B illustrates a situation in which an electronic device displays a screen received from an external electronic device in an embodiment.
FIG. 11C illustrates UIs displayed according to an input requesting power off of an external electronic device in an embodiment.

### [Mode for Invention]

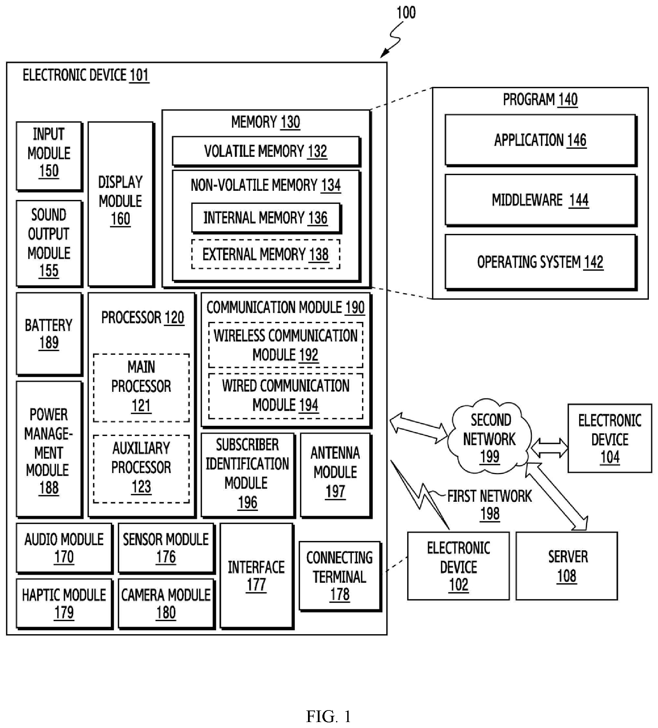

FIG. 1 is a block diagram of an electronic device in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

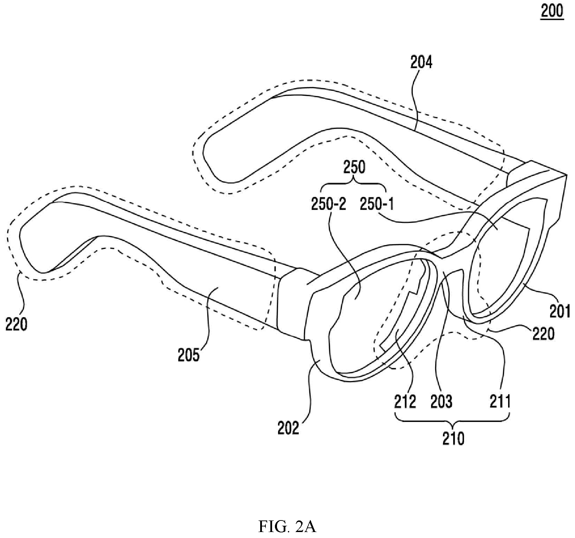

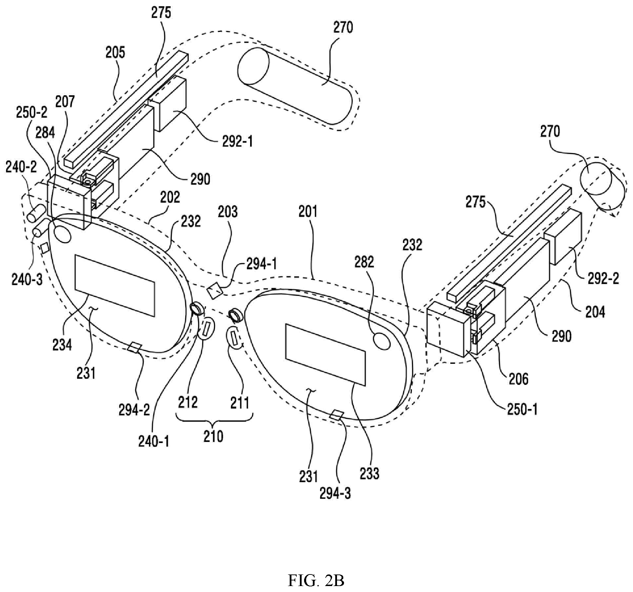

FIG. 2A illustrates an example of a perspective view of a wearable device 200 according to an embodiment. FIG. 2B illustrates an example of one or more hardware disposed in the wearable device 200 according to an embodiment. The wearable device 200 of FIGS. 2A to 2B may correspond to the electronic device 101 of FIG. 1. As shown in FIG. 2A, the wearable device 200 according to an embodiment may include at least one display 250 and a frame supporting the at least one display 250.

According to an embodiment, the wearable device 200 may be wearable on a portion of the user's body. The wearable device 200 may provide augmented reality (AR), virtual reality (VR), or mixed reality (MR) combining the augmented reality and the virtual reality to a user wearing the wearable device 200. For example, the wearable device 200 may output a virtual reality image through at least one display 250, in response to a user's preset gesture obtained through a motion recognition camera 240-2 of FIG. 2B.

According to an embodiment, the at least one display 250 in the wearable device 200 may provide visual information to a user. For example, the at least one display 250 may include a transparent or translucent lens. The at least one display 250 may include a first display 250-1 and/or a second display 250-2 spaced apart from the first display 250-1. For example, the first display 250-1 and the second display 250-2 may be disposed at positions corresponding to the user's left and right eyes, respectively.

Referring to FIG. 2B, the at least one display 250 may form a display area on the lens to provide a user wearing the wearable device 200 with visual information included in ambient light passing through the lens and other visual information distinct from the visual information. The lens may be formed based on at least one of a fresnel lens, a pancake lens, or a multi-channel lens. The display area formed by the at least one display 250 may be formed on the second surface 232 of the first surface 231 and the second surface 232 of the lens. When the user wears the wearable device 200, ambient light may be transmitted to the user by being incident on the first surface 231 and being penetrated through the second surface 232. For another example, the at least one display 250 may display a virtual reality image to be coupled with a reality screen transmitted through ambient light. The virtual reality image outputted from the at least one display 250 may be transmitted to eyes of the user, through one or more hardware (e.g., optical devices 282 and 284, and/or at least one waveguides 233 and 234) included in the wearable device 200.

According to an embodiment, the wearable device 200 may include waveguides 233 and 234 that transmit light transmitted from the at least one display 250 and relayed by the at least one optical device 282 and 284 by diffracting to the user. The waveguides 233 and 234 may be formed based on at least one of glass, plastic, or polymer. A nano pattern may be formed on at least a portion of the outside or inside of the waveguides 233 and 234. The nano pattern may be formed based on a grating structure having a polygonal or curved shape. Light incident to an end of the waveguides 233 and 234 may be propagated to another end of the waveguides 233 and 234 by the nano pattern. The waveguides 233 and 234 may include at least one of at least one diffraction element (e.g., a diffractive optical element (DOE), a holographic optical element (HOE)), and a reflection element (e.g., a reflection mirror). For example, the waveguides 233 and 234 may be disposed in the wearable device 200 to guide a screen displayed by the at least one display 250 to the user's eyes. For example, the screen may be transmitted to the user's eyes through total internal reflection (TIR) generated in the waveguides 233 and 234.

According to an embodiment, the wearable device 200 may analyze an object included in a real image collected through a photographing camera 240-3, combine the object of the real image with a virtual object corresponding to an object that become a subject of augmented reality provision among the analyzed object, and display the object of the real image and the virtual object on the at least one display 250. The virtual object may include at least one of text and images for various information associated with the object included in the real image. The wearable device 200 may analyze the object based on a multi-camera such as a stereo camera. For the object analysis, the wearable device 200 may execute time-of-flight (ToF) and/or simultaneous localization and mapping (SLAM) supported by the multi-camera. The user wearing the wearable device 200 may watch an image displayed on the at least one display 250.

According to an embodiment, a frame may be configured with a physical structure in which the wearable device 200 may be worn on the user's body. According to an embodiment, the frame may be configured so that when the user wears the wearable device 200, the first display 250-1 and the second display 250-2 may be positioned corresponding to the user's left and right eyes. The frame may support the at least one display 250. For example, the frame may support the first display 250-1 and the second display 250-2 to be positioned at positions corresponding to the user's left and right eyes.

Referring to FIG. 2A, according to an embodiment, the frame may include an area 220 at least partially in contact with the portion of the user's body in case that the user wears the wearable device 200. For example, the area 220 of the frame in contact with the portion of the user's body may include an area in contact with a portion of the user's nose, a portion of the user's ear, and a portion of the side of the user's face that the wearable device 200 contacts. According to an embodiment, the frame may include a nose pad 210 that is contacted on the portion of the user's body. When the wearable device 200 is worn by the user, the nose pad 210 may be contacted on the portion of the user's nose. The frame may include a first temple 204 and a second temple 205, which are contacted on another portion of the user's body that is distinct from the portion of the user's body.

For example, the frame may include a first rim 201 surrounding at least a portion of the first display 250-1, a second rim 202 surrounding at least a portion of the second display 250-2, a bridge 203 disposed between the first rim 201 and the second rim 202, a first pad 211 disposed along a portion of the edge of the first rim 201 from one end of the bridge 203, a second pad 212 disposed along a portion of the edge of the second rim 202 from the other end of the bridge 203, the first temple 204 extending from the first rim 201 and fixed to a portion of the wearer's ear, and the second temple 205 extending from the second rim 202 and fixed to a portion of the ear opposite to the ear. The first pad 211 and the second pad 212 may be in contact with the portion of the user's nose, and the first temple 204 and the second temple 205 may be in contact with a portion of the user's face and the portion of the user's ear. The temples 204 and 205 may be rotatably connected to the rim through hinge units 206 and 207 of FIG. 2B. The first temple 204 may be rotatably connected with respect to the first rim 201 through the first hinge unit 206 disposed between the first rim 201 and the first temple 204. The second temple 205 may be rotatably connected with respect to the second rim 202 through the second hinge unit 207 disposed between the second rim 202 and the second temple 205. According to an embodiment, the wearable device 200 may identify an external object (e.g., a user's fingertip) touching the frame and/or a gesture performed by the external object by using a touch sensor, a grip sensor, and/or a proximity sensor formed on at least a portion of the surface of the frame.

According to an embodiment, the wearable device 200 may include hardware (e.g., hardware described above based on the block diagram of FIG. 1) that performs various functions. For example, the hardware may include a battery module 270, an antenna module 275, optical devices 282 and 284, speakers 292-1 and 292-2, microphones 294-1, 294-2, and 294-3, a depth sensor module (not illustrated), and/or a printed circuit board (PCB) 290. Various hardware may be disposed in the frame.

According to an embodiment, the microphones 294-1, 294-2, and 294-3 of the wearable device 200 may obtain a sound signal, by being disposed on at least a portion of the frame. The first microphone 294-1 disposed on the nose pad 210, the second microphone 294-2 disposed on the second rim 202, and the third microphone 294-3 disposed on the first rim 201 are illustrated in FIG. 2B, but the number and disposition of the microphone 294 are not limited to an embodiment of FIG. 2B. In a case that the number of the microphone 294 included in the wearable device 200 is two or more, the wearable device 200 may identify a direction of the sound signal by using a plurality of microphones disposed on different portions of the frame.

According to an embodiment, the optical devices 282 and 284 may transmit a virtual object transmitted from the at least one display 250 to the wave guides 233 and 234. For example, the optical devices 282 and 284 may be projectors. The optical devices 282 and 284 may be disposed adjacent to the at least one display 250 or may be included in the at least one display 250 as a portion of the at least one display 250. The first optical device 282 may correspond to the first display 250-1, and the second optical device 284 may correspond to the second display 250-2. The first optical device 282 may transmit light outputted from the first display 250-1 to the first waveguide 233, and the second optical device 284 may transmit light outputted from the second display 250-2 to the second waveguide 234.

In an embodiment, a camera 240 may include an eye tracking camera (ET CAM) 240-1, a motion recognition camera 240-2 and/or the photographing camera 240-3. The photographing camera 240-3, the eye tracking camera 240-1, and the motion recognition camera 240-2 may be disposed at different positions on the frame and may perform different functions. The eye tracking camera 240-1 may output data indicating a gaze of the user wearing the wearable device 200. For example, the wearable device 200 may detect the gaze from an image including the user's pupil, obtained through the eye tracking camera 240-1. An example in which the eye tracking camera 240-1 is disposed toward the user's right eye is illustrated in FIG. 2B, but the embodiment is not limited thereto, and the eye tracking camera 240-1 may be disposed alone toward the user's left eye or may be disposed toward two eyes.

In an embodiment, the photographing camera 240-3 may photograph a real image or background to be matched with a virtual image in order to implement the augmented reality or mixed reality content. The photographing camera may photograph an image of a specific object existing at a position viewed by the user and may provide the image to the at least one display 250. The at least one display 250 may display one image in which a virtual image provided through the optical devices 282 and 284 is overlapped with information on the real image or background including the image of the specific object obtained by using the photographing camera. In an embodiment, the photographing camera may be disposed on the bridge 203 disposed between the first rim 201 and the second rim 202.

In an embodiment, the eye tracking camera 240-1 may implement a more realistic augmented reality by matching the user's gaze with the visual information provided on the at least one display 250, by tracking the gaze of the user wearing the wearable device 200. For example, when the user looks at the front, the wearable device 200 may naturally display environment information associated with the user's front on the at least one display 250 at a position where the user is positioned. The eye tracking camera 240-1 may be configured to capture an image of the user's pupil in order to determine the user's gaze. For example, the eye tracking camera 240-1 may receive gaze detection light reflected from the user's pupil and may track the user's gaze based on the position and movement of the received gaze detection light. In an embodiment, the eye tracking camera 240-1 may be disposed at a position corresponding to the user's left and right eyes. For example, the eye tracking camera 240-1 may be disposed in the first rim 201 and/or the second rim 202 to face the direction in which the user wearing the wearable device 200 is positioned.

The motion recognition camera 240-2 may provide a specific event to the screen provided on the at least one display 250 by recognizing the movement of the whole or portion of the user's body, such as the user's torso, hand, or face. The motion recognition camera 240-2 may obtain a signal corresponding to motion by recognizing the user's gesture, and may provide (and/or cause the generation of) a display corresponding to the signal to the at least one display 250. A processor may identify a signal corresponding to the operation and may perform a preset function based on the identification. In an embodiment, the motion recognition camera 240-2 may be disposed on the first rim 201 and/or the second rim 202.

In an embodiment, the camera 240 included in the wearable device 200 is not limited to the above-described eye tracking camera 240-1 and the motion recognition camera 240-2. For example, the wearable device 200 may identify an external object included in the FoV by using a photographing camera 240-3 disposed toward the user's FoV. The wearable device 200 identifying the external object may be performed based on a sensor for identifying a distance between the wearable device 200 and the external object, such as a depth sensor and/or a time of flight (ToF) sensor. The camera 240 disposed toward the FoV may support an autofocus function and/or an optical image stabilization (OIS) function. For example, in order to obtain an image including a face of the user wearing the wearable device 200, the wearable device 200 may include the camera 240 (e.g., a face tracking (FT) camera) disposed toward the face.

Although not illustrated, the wearable device 200 according to an embodiment may further include a light source (e.g., LED) that emits light toward a subject (e.g., user's eyes, face, and/or an external object in the FoV) photographed by using the camera 240. The light source may include an LED having an infrared wavelength. The light source may be disposed on at least one of the frame, and the hinge units 206 and 207.

According to an embodiment, the battery module 270 may supply power to electronic components of the wearable device 200. In an embodiment, the battery module 270 may be disposed in the first temple 204 and/or the second temple 205. For example, the battery module 270 may be a plurality of battery modules 270. The plurality of battery modules 270, respectively, may be disposed on each of the first temple 204 and the second temple 205. In an embodiment, the battery module 270 may be disposed at an end of the first temple 204 and/or the second temple 205.

According to an embodiment, the antenna module 275 may transmit the signal or power to the outside of the wearable device 200 or may receive the signal or power from the outside. The antenna module 275 may be electrically and/or operably connected to the communication module 190 of FIG. 1. In an embodiment, the antenna module 275 may be disposed in the first temple 204 and/or the second temple 205. For example, the antenna module 275 may be disposed close to one surface of the first temple 204 and/or the second temple 205.

According to an embodiment, the speakers 292-1 and 292-2 may output a sound signal to the outside of the wearable device 200. A sound output module may be referred to as a speaker. In an embodiment, the speakers 292-1 and 292-2 may be disposed in the first temple 204 and/or the second temple 205 in order to be disposed adjacent to the ear of the user wearing the wearable device 200. For example, the wearable device 200 may include a second speaker 292-2 disposed adjacent to the user's left ear by being disposed in the first temple 204, and a first speaker 292-1 disposed adjacent to the user's right ear by being disposed in the second temple 205.

According to an embodiment, the light emitting module (not illustrated) may include at least one light emitting element. The light emitting module may emit light of a color corresponding to a specific state or may emit light through an operation corresponding to the specific state in order to visually provide information on a specific state of the wearable device 200 to the user. For example, when requiring charging, the wearable device 200 may emit repeatedly red light at a preset timing. In an embodiment, the light emitting module may be disposed on the first rim 201 and/or the second rim 202.

Referring to FIG. 2B, according to an embodiment, the wearable device 200 may include the printed circuit board (PCB) 290. The PCB 290 may be included in at least one of the first temple 204 or the second temple 205. The PCB 290 may include an interposer disposed between at least two sub PCBs. On the PCB 290, one or more hardware included in the wearable device 200 may be disposed. The wearable device 200 may include a flexible PCB (FPCB) for interconnecting the hardware.

According to an embodiment, the wearable device 200 may include at least one of a gyro sensor, a gravity sensor, and/or an acceleration sensor for detecting the posture of the wearable device 200 and/or the posture of a body part (e.g., a head) of the user wearing the wearable device 200. Each of the gravity sensor and the acceleration sensor may measure gravity acceleration, and/or acceleration based on preset 3-dimensional axes (e.g., x-axis, y-axis, and z-axis) perpendicular to each other. The gyro sensor may measure angular velocity of each of preset 3-dimensional axes (e.g., x-axis, y-axis, and z-axis). At least one of the gravity sensor, the acceleration sensor, and the gyro sensor may be referred to as an inertial measurement unit (IMU). According to an embodiment, the wearable device 200 may identify the user's motion and/or gesture performed to execute or stop a specific function of the wearable device 200 based on the IMU.

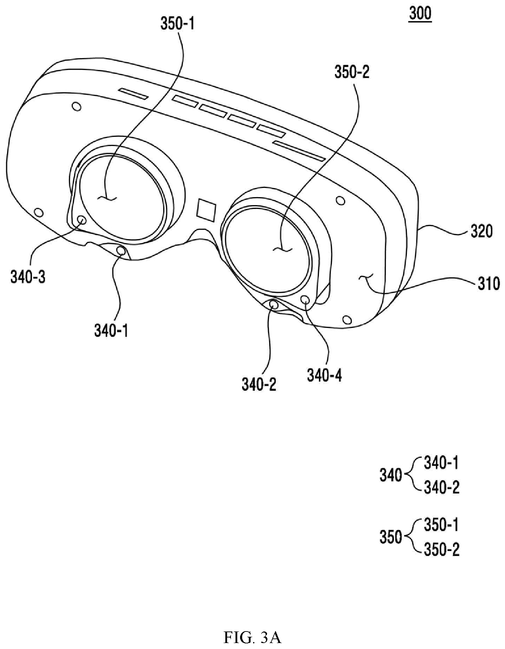

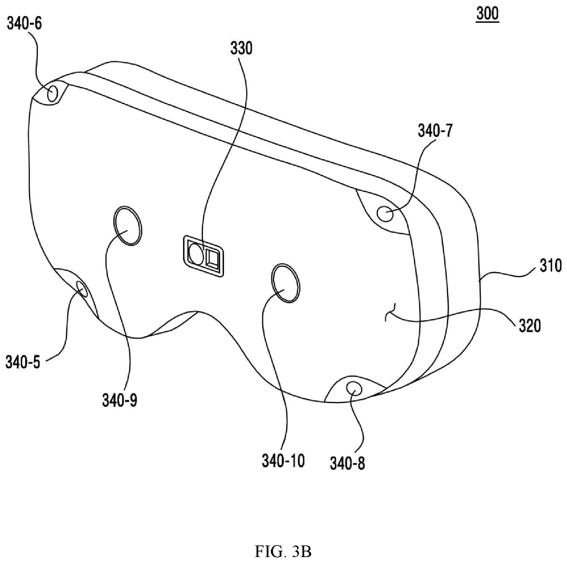

FIGS. 3A to 3B illustrate an example of an exterior of a wearable device 300 according to an embodiment. The wearable device 300 of FIGS. 3A to 3B may be included in the electronic device 101 of FIG. 1. According to an embodiment, an example of an exterior of a first surface 310 of a housing of the wearable device 300 is shown in FIG. 3A, and an example of an exterior of a second surface 320 opposite to the first surface 310 may be illustrated in FIG. 3B.

Referring to FIG. 3A, according to an embodiment, the first surface 310 of the wearable device 300 may have an attachable shape on the user's body part (e.g., the user's face). Although not illustrated, the wearable device 300 may further include a strap for being fixed on the user's body part, and/or one or more temples (e.g., the first temple 204 and/or the second temple 205 of FIGS. 2A to 2B). A first display 350-1 for outputting an image to the left eye among the user's two eyes and a second display 350-2 for outputting an image to the right eye among the user's two eyes may be disposed on the first surface 310. The wearable device 300 may further include rubber or silicon packing, which are formed on the first surface 310, for preventing interference by light (e.g., ambient light) different from the light emitted from the first display 350-1 and the second display 350-2.

According to an embodiment, the wearable device 300 may include cameras 340-1 and 340-2 for photographing and/or tracking two eyes of the user adjacent to each of the first display 350-1 and the second display 350-2. The cameras 340-1 and 340-2 may be referred to as the ET camera. According to an embodiment, the wearable device 300 may include cameras 340-3 and 340-4 for photographing and/or recognizing the user's face. The cameras 340-3 and 340-4 may be referred to as a FT camera.

Referring to FIG. 3B, a camera (e.g., cameras 340-5, 340-6, 340-7, 340-8, 340-9, and 340-10), and/or a sensor (e.g., the depth sensor 330) for obtaining information associated with the external environment of the wearable device 300 may be disposed on the second surface 320 opposite to the first surface 310 of FIG. 3A. For example, the cameras 340-5, 340-6, 340-7, 340-8, 340-9, and 340-10 may be disposed on the second surface 320 in order to recognize an external object distinct from the wearable device 300. For example, by using cameras 340-9 and 340-10, the wearable device 300 may obtain an image and/or video to be transmitted to each of the user's two eyes. The camera 340-9 may be disposed on the second surface 320 of the wearable device 300 to obtain an image to be displayed through the second display 350-2 corresponding to the right eye among the two eyes. The camera 340-10 may be disposed on the second surface 320 of the wearable device 300 to obtain an image to be displayed through the first display 350-1 corresponding to the left eye among the two eyes.

According to an embodiment, the wearable device 300 may include the depth sensor 330 disposed on the second surface 320 in order to identify a distance between the wearable device 300 and the external object. By using the depth sensor 330, the wearable device 300 may obtain spatial information (e.g., a depth map) about at least a portion of the FoV of the user wearing the wearable device 300.

Although not illustrated, a microphone for obtaining sound outputted from the external object may be disposed on the second surface 320 of the wearable device 300. The number of microphones may be one or more according to embodiments.

As described above, according to an embodiment, the wearable device 300 may have a form factor for being worn on a head of a user. The wearable device 300 may provide a user experience based on augmented reality, virtual reality, and/or mixed reality in a state of being worn on the head. The wearable device 300 and a server (e.g., the server 110 of FIG. 1) connected to the wearable device 300 may provide an on-demand service and/or a metaverse service that provides a video of a location and/or a place selected by the user, using cameras 340-5, 340-6, 340-7, 340-8, 340-9, and 340-10 for recording a video for an external space.

According to an embodiment, the wearable device 300 may display frames obtained via the cameras 340-9 and 340-10 on each of a first display 350-1 and a second display 350-2. The wearable device 300 may provide the user with a user experience (e.g., a video see-through (VST)) in which a real object and a virtual object are mixed, by coupling the virtual object in a frame including the real object and displayed via the first display 350-1 and the second display 350-2. The wearable device 300 may change the virtual object based on information obtained by the cameras 340-1, 340-2, 340-3, 340-4, 340-5, 340-6, 340-7, and 340-8 and/or the depth sensor 330. For example, in the case that a visual object corresponding to the real object and the virtual object are at least partially overlapped in the frame, the wearable device 300 may cease displaying the virtual object based on detecting a motion to interact with the real object. The wearable device 300 may prevent visibility of the real object from deteriorating (or being blocked) as the visual object corresponding to the real object is occluded by the virtual object, by ceasing displaying the virtual object.

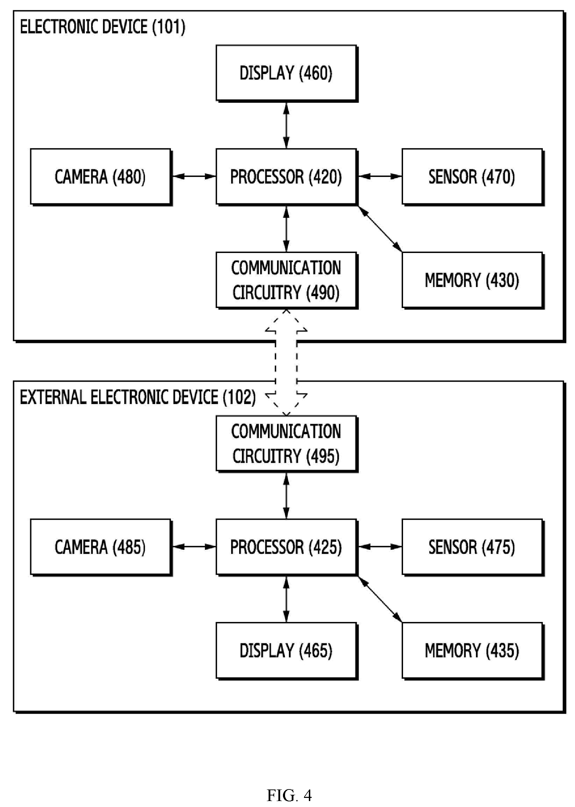

FIG. 4 illustrates an example of a block diagram of an electronic device according to an embodiment.

An electronic device 101 of FIG. 4 may correspond to the electronic device 101 of FIG. 1. The electronic device 101 of FIG. 4 may correspond to the wearable device 200 of FIGS. 2A and 2B. The electronic device 101 of FIG. 4 may correspond to the wearable device 300 of FIGS. 3A and 3B. An external electronic device 102 of FIG. 4 may correspond to the electronic device 102 of FIG. 1.

Referring to FIG. 4, the electronic device 101 may include at least one of a processor 420, memory 430, a display 460, a camera 480, a sensor 470, or communication circuitry 490. The processor 420 of FIG. 4 may correspond to the processor 120 of FIG. 1. The memory 430 of FIG. 4 may correspond to the memory 130 of FIG. 1. The display 460 of FIG. 4 may correspond to the display module 160 of FIG. 1. The display 460 of FIG. 4 may correspond to the display 250 of FIGS. 2A and 2B, or the display 350 of FIGS. 3A and 3B. The camera 480 of FIG. 4 may correspond to the camera module 180 of FIG. 1. The camera 480 of FIG. 4 may correspond to the cameras 240-1, 240-2, and 240-3 of FIGS. 2A and 2B, or the cameras 340-1, 340-2, 340-3, 340-4, 340-5, 340-6, 340-7, 340-8, 340-9, and 340-10 of FIGS. 3A and 3B. The sensor 470 of FIG. 4 may correspond to the sensor module 176 of FIG. 1. The communication circuitry 490 of FIG. 4 may correspond to the communication module 190 of FIG. 1.

In an embodiment, the processor 420 may include a hardware component for processing data based on one or more instructions. The hardware component for processing data may include, for example, an arithmetic and logic unit (ALU), a field programmable gate array (FPGA), and/or a central processing unit (CPU). The number of the processor 420 may be one or more. For example, the processor 420 may have a structure of a multi-core processor such as a dual core, a quad core, or a hexa core.

In an embodiment, the memory 430 may include a hardware component for storing data and/or instructions inputted and/or outputted to the processor 420. The memory 430 may include, for example, volatile memory such as random-access memory (RAM) and/or non-volatile memory such as read-only memory (ROM). The volatile memory may include, for example, at least one of dynamic RAM (DRAM), static RAM (SRAM), Cache RAM, and pseudo SRAM (PSRAM). The non-volatile memory may include, for example, at least one of programmable ROM (PROM), erasable PROM (EPROM), electrically erasable PROM (EEPROM), flash memory, a hard disk, a compact disk, and an embedded multi-media card (eMMC).

In an embodiment, the display 460 may output visualized information to a user of the electronic device 101. For example, the display 460 may output the visualized information to the user by being controlled by the processor 420 including a circuit such as a graphic processing unit (GPU). The display 460 may include a flat panel display (FPD) and/or electronic paper. The FPD may include a liquid crystal display (LCD), a plasma display panel (PDP), and/or one or more light emitting diodes (LEDs). The LED may include an organic LED (OLED).

In an embodiment, the camera 480 of the electronic device 101 may include one or more optical sensors (e.g., a charged coupled device (CCD) sensor and a complementary metal oxide semiconductor (CMOS) sensor) that generate an electrical signal indicating a color and/or brightness of light. A plurality of optical sensors included in the camera 480 may be disposed in a form of a two-dimensional grid. The camera 480 may generate two-dimensional frame data corresponding to light reaching the optical sensors of the two-dimensional grid by obtaining electrical signals of each of the plurality of optical sensors substantially simultaneously. For example, photo data captured using the camera 480 may mean one two-dimensional frame data obtained from the camera 480. For example, video data captured using the camera 480 may mean a sequence of a plurality of two-dimensional frame data obtained from the camera 480 according to a frame rate. The camera 480 may further include a flash light disposed toward a direction in which the camera 480 receives light, and for outputting the light toward the direction.

In an embodiment, as an example of the camera 480, a plurality of cameras disposed toward different directions may be included. Among the plurality of cameras, a first camera may be referred to as a motion recognition camera (e.g., the motion recognition cameras 240-2 and 240-3 of FIG. 2B), and a second camera may be referred to as a gaze tracking camera (e.g., the gaze tracking camera 240-1 of FIG. 2B). The electronic device 101 may identify a position, a shape, and/or a gesture of a hand by using an image obtained using the first camera. The electronic device 101 may identify a direction of a gaze of the user wearing the electronic device 101 by using an image obtained using the second camera. As an example, a direction in which the first camera faces and a direction in which the second camera faces may be opposite to each other.

In an embodiment, the sensor 470 may generate electronic information that may be processed by the processor 420 and/or the memory 430 of the electronic device 101 from non-electronic information associated with the electronic device 101. The information may be referred to as sensor data. The sensor 470 may include a global positioning system (GPS) sensor for detecting a geographic location of the electronic device 101, an image sensor, an illumination sensor and/or a time-of-flight (ToF) sensor and an inertial measurement unit (IMU) for detecting a physical motion of the electronic device 101.

In an embodiment, the communication circuitry 490 may include a hardware component for supporting transmission and/or reception of an electrical signal between the electronic device 101 and the external electronic device 102. The communication circuitry 490 may include, for example, at least one of a MODEM, an antenna, and an optic/electronic (O/E) converter. The communication circuitry 490 may support the transmission and/or the reception of the electrical signal based on various types of protocols such as an ethernet, a local area network (LAN), a wide area network (WAN), a wireless fidelity (WiFi), a Bluetooth, a Bluetooth low energy (BLE), a ZigBee, a long term evolution (LTE), a 5G new radio (NR), and/or a 6G.

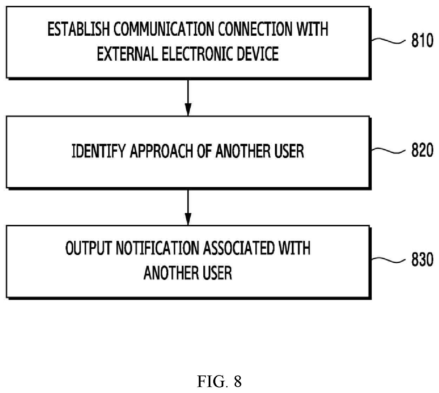

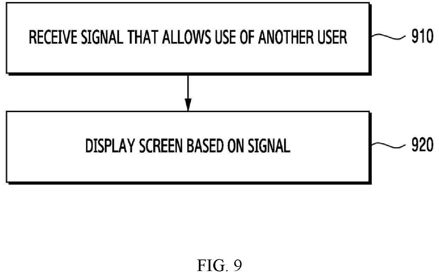

According to an embodiment, in the memory 430 of the electronic device 101, one or more instructions (or commands) indicating computation and/or an operation to be performed by the processor 420 of the electronic device 101 on data may be stored. A set of one or more instructions may be referred to as a firmware, an operating system, a process, a routine, a subroutine and/or an application. For example, when a set of a plurality of instructions distributed in a form of an operating system, a firmware, a driver, and/or an application is executed, the electronic device 101 and/or the processor 420 may perform at least one of operations of FIG. 8 or FIG. 9. Hereinafter, an application being installed in the electronic device 101 may mean that the one or more applications are stored in a format executable by the processor 420 (e.g., a file having an extension designated by the operating system of the electronic device 101). As an example, the application may include a program and/or a library associated with a service provided to the user.

Referring to FIG. 4, the external electronic device 102 may include at least one of a processor 425, memory 435, a display 465, a camera 485, a sensor 475, or communication circuitry 495.

The processor 425 of FIG. 4 may correspond to the processor 120 of FIG. 1. The memory 435 of FIG. 4 may correspond to the memory 130 of FIG. 1. The display 465 of FIG. 4 may correspond to the display module 160 of FIG. 1. The camera 485 of FIG. 4 may correspond to the camera module 180 of FIG. 1. The sensor 475 of FIG. 4 may correspond to the sensor module 176 of FIG. 1. The communication circuitry 495 of FIG. 4 may correspond to the communication module 190 of FIG. 1.

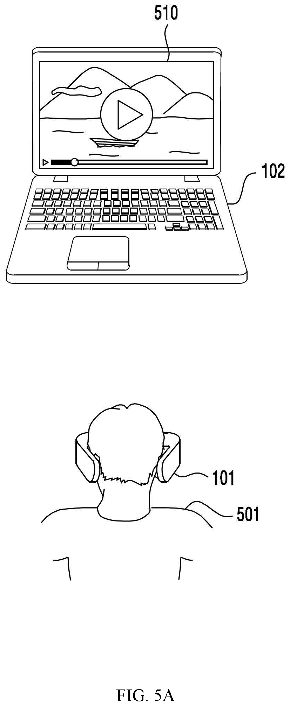

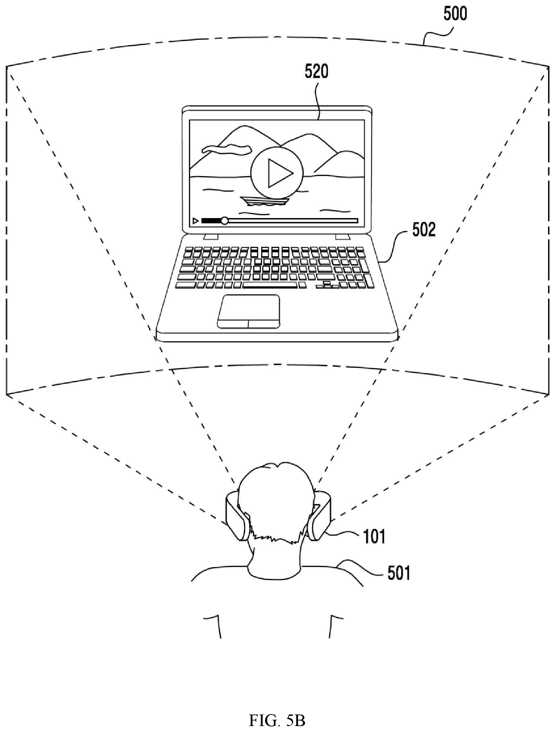

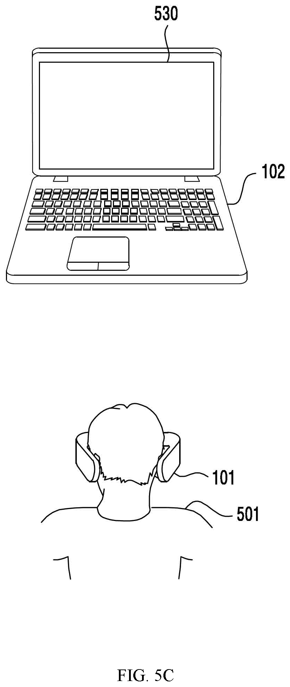

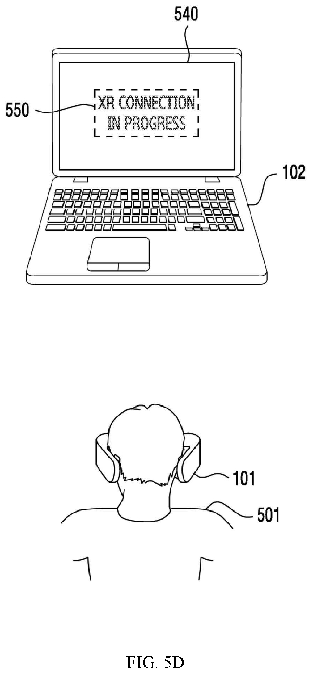

FIG. 5A illustrates a situation in which a user wearing an electronic device approaches an external electronic device in an embodiment. FIG. 5B illustrates an example of a field of view (FoV) of an electronic device in an embodiment. FIG. 5C illustrates an example of a screen displayed on an external electronic device during a communication connection between an electronic device and the external electronic device in an embodiment. FIG. 5D illustrates an example of a screen displayed on an external electronic device during a communication connection between an electronic device and the external electronic device in an embodiment.

Referring to FIG. 5A, an electronic device 101 may be worn by a user 501. In an embodiment, while wearing the electronic device 101, the user 501 may input a user input requesting establishment of a communication connection between the electronic device 101 and an external electronic device 102 to use the external electronic device 102. For example, the user 501 may input the user input requesting the establishment of the communication connection between the electronic device 101 and the external electronic device 102 to display a screen generated by the external electronic device 102 in a FOV (e.g., FOV 500 of FIG. 5B) of the electronic device 101. For example, the user 501 may input the user input requesting the establishment of the communication connection between the electronic device 101 and the external electronic device 102 for the electronic device 101 to display a screen (e.g., screen 520 of FIG. 5B) within the FOV 500 based on data provided by the external electronic device 102, rather than displaying a screen 510 of the external electronic device 101 via video see through (VST) of the electronic device 101. For example, displaying the screen 510 of the external electronic device 102 via the VST of the electronic device 101 may be displaying the screen 510 of the external electronic device 102 captured by the electronic device 101 via a camera 480. The electronic device 101 displaying the screen 520 within the FOV 500 based on the data provided by the external electronic device 102 may mean that the electronic device 101 displays the screen 520 generated by rendering the data obtained from the external electronic device 102 onto the electronic device 101. The electronic device 101 displaying the screen 520 within the FOV 500 based on the data provided by the external electronic device 102 may mean that the electronic device 101 mirrors the screen 510 of the external electronic device 102. In an embodiment, the screen 520 may correspond to the screen 510. In an embodiment, an attribute of the screen 520 may be different from an attribute of the screen 510. For example, a size, and image quality of the screen 520, and/or content within the screen 520, may be at least partially different from a size, and image quality, of the screen 510 and/or content within the screen 510. For example, the screen 520 may be referred to as a mirror screen in terms of mirroring the screen 510 in the electronic device 101.

In an embodiment, the electronic device 101 may establish the communication connection with the external electronic device 102 via the communication circuitry 490 based on a user input. For example, the electronic device 101 may establish the communication connection with the external electronic device 102 in response to the user input for the communication connection with the external electronic device 102. For example, the electronic device 101 may establish the communication connection with the external electronic device 102 selected by a user input that selects a visual object 502 indicating the external electronic device 102 displayed within the FOV 500. For example, the electronic device 101 may establish the communication connection with the external electronic device 102 selected from a list of electronic devices to which a user account of a user logged into the electronic device 101 is logged in. For example, the electronic device 101 may establish the communication connection with the external electronic device 102 selected from a list of electronic devices that have previously had a communication connection with the electronic device 101. For example, the electronic device 101 may establish the communication connection with the external electronic device 102 selected from a list of electronic devices that have transmitted an advertisement packet to the electronic device 101.

In an embodiment, the external electronic device 102 may receive a request for establishing a communication connection from the electronic device 101 via communication circuitry 495. In an embodiment, while displaying the screen 510, the external electronic device 102 may receive the request for establishing the communication connection from the electronic device 101. In an embodiment, the communication connection between the electronic device 101 and the external electronic device 102 may be a communication connection based on short-range wireless communication (e.g., a WiFi, a Bluetooth, or a BLE). However, it is not limited thereto. For example, the communication connection between the electronic device 101 and the external electronic device 102 may be a communication connection based on long-distance wireless communication (e.g., a cellular network).

In an embodiment, the external electronic device 102 may transmit data associated with the screen 510 to the electronic device 101 via the communication circuitry 495 based on the establishment of the communication connection with the electronic device 101. In an embodiment, data associated with the screen 510 may be data for generating a screen to be displayed via a display 460 of the electronic device 101. In an embodiment, data associated with the screen 510 may be a frame (or an image) rendered by the external electronic device 102. In an embodiment, data associated with the screen 510 may be data for rendering a screen 520 on the electronic device 101.

In an embodiment, the electronic device 101 may receive data associated with the screen 510 from the external electronic device 102 via the communication circuitry 490 based on the establishment of the communication connection with the external electronic device 102. In an embodiment, data associated with the screen 510 may be data for generating a screen to be displayed via the display 460 of the electronic device 101.

Referring to FIG. 5B, the electronic device 101 may display the screen 520 via the display 460 based on receiving the data associated with the screen 510 from the external electronic device 102. For example, the electronic device 101 may display the visual object 502 indicating the external electronic device 102 and the screen 520 corresponding to the screen 510 within the FOV 500. In an embodiment, the visual object 502 and the screen 520 may be displayed based on a stereoscopic image on the display 460. The stereoscopic image may be an image considering binocular parallax of the user 501. The stereoscopic image may be an image for providing a three dimensional spatial sense to the user 501. Herein, the visual object 502 may indicate the external electronic device 102 located in a real space. Herein, indicating the external electronic device 102 located in the real space may mean that the external electronic device 102 existing in the real space may be visible to the user 501 via the display 460 via the video see through (VST). Indicating the external electronic device 102 located in the real space may mean that an image indicating the real space obtained via the camera 480 (or the cameras 240-3, 340-9, and 340-10 on front) via the VST is provided to the user 501. Herein, the screen 520 may be displayed in the FOV 500 of the display 460 based on data associated with the screen 510 transmitted from the external electronic device 102 to the electronic device 101. In FIG. 5B, the electronic device 101 receives the data of the screen 510 transmitted from the external electronic device 102 and uses the data of the screen 510 to generate the screen 510 as screen 520 on the display 460 along with displaying the visual object 502 representing the external electronic device 102 on the display 460.

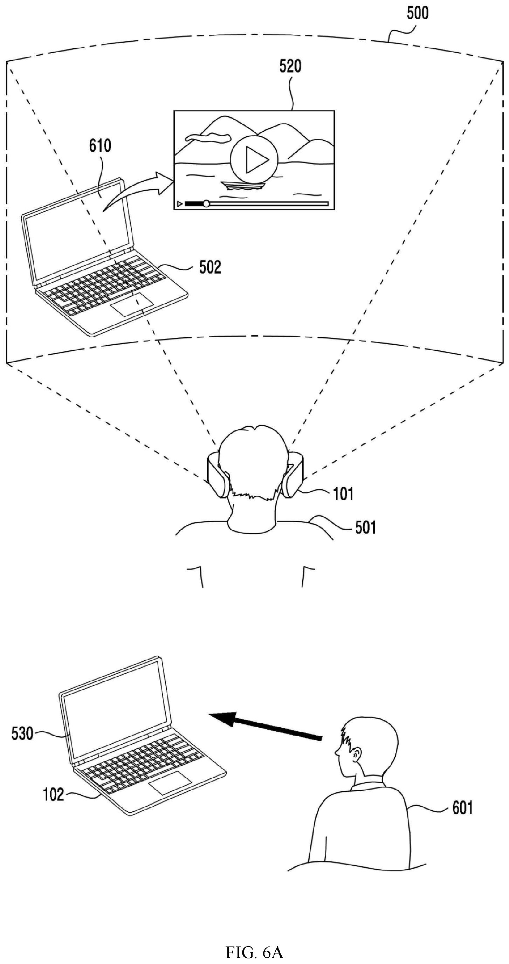

In an embodiment, while transmitting the data associated with the screen 510 to the electronic device 101, the external electronic device 102 may cease displaying the screen 510. In an embodiment, ceasing a display of the screen 510 may include switching a display 465 to a low power state. For example, switching the display 465 to the low power state may include turning off the display 465. For example, referring to FIG. 5C, as the external electronic device 102 turns off the display 465, the display 465 may appear to be in a turned off state 530. However, it is not limited thereto. In an embodiment, ceasing the display of the screen 510 may include the external electronic device 102 displaying another screen (e.g., a lock screen, a screen saver, an always on display (AoD) screen, a screen (or a dimming screen) with a lower screen brightness, or a screen with a designated monochrome (e.g., black) screen) on the display 465 other than the screen 510, on the display 465. For example, referring to FIG. 5D, the external electronic device 102 may display a screen 540 distinguished from the screen 510 on the display 465. For example, switching the display 465 to the low power state may include decreasing an operating frequency of the display 465. For example, while displaying the screen 540 different from the screen 510 on the display 465, the external electronic device 102 may decrease the operating frequency of the display 465. In an embodiment, the screen 540 may include a visual object 550. For example, the visual object 550 may indicate that the external electronic device 102 is used by the electronic device 101. In an embodiment, while the external electronic device 102 is linked with the electronic device 101, the visual object 550 may be displayed on the display 465 of the external electronic device 102 regardless of an approach of another user (e.g., user 601 of FIG. 6A). In an embodiment, the visual object 550 may be an image (e.g., an icon) indicating that the external electronic device 102 is linked with the electronic device 101 as well as text such as "XR connection in progress". In an embodiment, the visual object 550 may be not only a guide phrase such as "XR connection in progress", but also various guide phrases (e.g., "Currently performing mirroring operation via XR." "Access is restricted because XR of a user is currently using this device." "Access is restricted because user AAA is currently using this device.") indicating a specific state (or a situation) of the external electronic device 102.

In an embodiment, while the external electronic device 102 ceases displaying the screen 510, the screen 520 corresponding to the screen 510 may be displayed in the FOV 500 of the electronic device 101.

According to an embodiment, while transmitting the data associated with the screen 510 to the electronic device 101, the external electronic device 102 may maintain the display of the screen 510.

As described above, as the external electronic device 102 ceases displaying the screen 510 while transmitting the data associated with the screen 510 to the electronic device 101, it may not be easy for another external user to recognize that the external electronic device 102 is being used by the user 501 of the electronic device 101. Accordingly, while the user 501 uses the external electronic device 102 that is in the communication connection via the electronic device 101, another user may attempt to use the external electronic device 102 or may move elsewhere with it. The other user may attempt to organize the external electronic device 102 (e.g., closing a laptop) while the user 501 uses the external electronic device 102 communicatively connected via the electronic device 101. In this case, the user 501 may be hindered from using the external electronic device 102. In addition, while the user 501 is using the external electronic device 102 via the FOV 500, in case that the other user needs to use the external electronic device 102, it may be difficult for the other user to obtain permission to use the external electronic device 102 from the user 501.

Accordingly, a method for decreasing a probability that the user 501 is hindered by or interrupted by the other user may be required. Hereinafter, referring to FIGS. 6A to 6C, an operation of the electronic device 101 and/or the external electronic device 102 for decreasing the probability that the user 501 is hindered by the other user will be described. In addition, a method may be required for the other user (e.g., user 601) to obtain permission from user 501 to use the external electronic device 102. Hereinafter, referring to FIGS. 6A to 6C, an operation of the electronic device 101 and/or the external electronic device 102 for the other user to obtain the permission from the user 501 to use the external electronic device 102 will be described.

FIG. 6A illustrates a situation in which another user approaches an external electronic device during a communication connection between an electronic device and the external electronic device in an embodiment.

FIG. 6A may be described with reference to the components of the electronic device 101 and the external electronic device 102 of FIG. 4. FIG. 6A may be described with reference to FIGS. 5A to 5D.

Referring to FIG. 6A, while an electronic device 101 displays a screen 520 in a FOV 500 based on data associated with a screen (e.g., the screen 510 of FIG. 5A) received from an external electronic device 102, the electronic device 101 may, based on an input of a user 501, move or enlarge the screen 520 to another location within the FOV 500. For example, the screen 520 may deviate from a location where a visual object 502 indicating the external electronic device 102 is displayed within the FOV 500. For example, as the screen 520 is moved within the FOV 500, an area 610 describing a display 465 of the external electronic device 102 among the visual object 502 may actually indicate a display state (e.g., the state 530 of FIG. 5C) or a screen (e.g., the screen 540 of FIG. 5D) of a display of the external electronic device 102.

Referring to FIG. 6A, while the electronic device 101 displays the screen 520 in the FOV 500, another user 601 may approach the external electronic device 102. For example, while the electronic device 101 and the external electronic device 102 are linked to each other, the other users 601 may approach the external electronic device 102.

In an embodiment, the electronic device 101 and/or the external electronic device 102 may identify an approach of the other user 601 to the external electronic device 102. For example, during the communication connection between the electronic device 101 and the external electronic device 102 (or while the external electronic device 102 transmits data (e.g., data indicating a screen 510) for rendering the screen 520 to the electronic device 101), at least one of the electronic device 101 or the external electronic device 102 may monitor the other user 601 approaching the external electronic device 102.

In an embodiment, the electronic device 101 may identify the approach of the other user 601 to the external electronic device 102 using a camera 480. For example, the electronic device 101 may identify the approach of the other user 601 to the external electronic device 102 in an image obtained using the camera 480. However, it is not limited thereto. For example, the electronic device 101 may identify another electronic device approaching the external electronic device 102 via communication circuitry 490. For example, the electronic device 101 may identify that the other user 601 approaches the external electronic device 102 based on identifying the other electronic device approaching the external electronic device 102. For example, the electronic device 101 may identify the approach of the other electronic device to the external electronic device 102 as the approach of other users 601 by using a communication technique (e.g., an ultra wide band (UWB)) to identify the other electronic device worn by the other user 601. In one or more embodiments, the other electronic device of the other user 601 may be a mobile device such as a cellphone, a tablet, a wearable device, etc., which emits a signal recognizable by the electronic device 101 and/or the external electronic device 102, such that identification of the signal from the other electronic device is recognized as the approach of the other user 601. In one or more embodiments, the approach of the other user 601 can correspond to the presence of the other user 601 within a predefined proximity/distance of the external electronic device 102 as determined by using the camera 485 and/or sensor 475 of the external electronic device 102; as such, the approach of the other user 601 includes not only the other user 601 moving toward the external electronic device 102 but being within a predefined proximity/distance of the external electronic device 102. The approach of the other user 601 can include speech (or the voice), movement, etc., made by the other user 601 within a predefined proximity/distance of the external electronic device 102, which can be captured by the camera 485 and/or sensor 475 of the external electronic device 102 and/or captured by the camera 480 and/or sensor 470 of the electronic device 101 of the user 501.

In an embodiment, the external electronic device 102 may transmit a signal indicating that the other user 601 approaches the external electronic device 102 to the electronic device 101 via communication circuitry 495. In an embodiment, the electronic device 101 may identify that the other user 601 approaches the external electronic device 102 based on the signal from the external electronic device 102.

In an embodiment, the external electronic device 102 may identify the approach of the other user 601 to the external electronic device 102 using a camera 485. For example, the external electronic device 102 may identify the approach of the other user 601 to the external electronic device 102 in an image obtained using the camera 485. In an embodiment, the external electronic device 102 may identify the approach of the other user 601 to the external electronic device 102 based on identifying that the other user 601 in the image obtained using the camera 485 is not wearing the electronic device 101. In an embodiment, the external electronic device 102 may identify the approach of the external electronic device 102 of the other user 601 identified as not wearing the electronic device 101 based on the image obtained using the camera 485. However, it is not limited thereto. In an embodiment, the external electronic device 102 may identify an approach of the external electronic device 102 of the other user 601 wearing a wearable device using the camera 485. In an embodiment, the external electronic device 102 may identify the other user 601 wearing the wearable device based on feature points (or a feature map) of a user identified in the image obtained via the camera 485 being different from feature points (or a feature map) of the user 501 registered in the external electronic device 102. However, it is not limited thereto. For example, the external electronic device 102 may identify another electronic device approaching the external electronic device 102 via the communication circuitry 495. For example, the external electronic device 102 may identify that the other user 601 approaches the external electronic device 102 based on identifying the other electronic device approaching the external electronic device 102. For example, the external electronic device 102 may identify an approach of the other electronic device to the external electronic device 102 as an approach of the other user 601 using the communication technique (e.g., the UWB) for identifying the other electronic device worn by the other user 601.

In an embodiment, the electronic device 101 may transmit a signal indicating that the other user 601 approaches the external electronic device 102 via the communication circuitry 490. In an embodiment, the external electronic device 102 may identify that the other user 601 approaches the external electronic device 102 based on the signal from the electronic device 101.

In an embodiment, the electronic device 101 and/or the external electronic device 102 may identify that the other user 601 approaches within a designated distance from the external electronic device 102. In an embodiment, the designated distance may have an absolute value. For example, the absolute value may be one meter. In an embodiment, the designated distance may have a relative value (e.g., a value based on a distance between the electronic device 101 and the external electronic device 102). For example, the relative value may be a value within the distance between the electronic device 101 and the external electronic device 102.

In an embodiment, the electronic device 101 and/or the external electronic device 102 may identify an intention of the other user 601 in which the other user 601 approaches the external electronic device 102. For example, the electronic device 101 and/or the external electronic device 102 may identify the intention of the other user 601 based on an approach pattern of the other user 601 to the external electronic device 102. For example, in the case that the other user 601 moves to the external electronic device 102 along a shortest distance toward the external electronic device 102, the electronic device 101 and/or the external electronic device 102 may determine that the other user 601 intends to use the external electronic device 102. For example, the electronic device 101 and/or the external electronic device 102 may determine that the other user 601 intends to use the external electronic device 102 in the case that the other user 601 moves toward the external electronic device 102 while looking at the external electronic device 102.

In an embodiment, the electronic device 101 and/or the external electronic device 102 may perform a process for providing a notification to the user 501 and/or the other user 601 based on identifying that the other user 601 approaches the external electronic device 102. In an embodiment, the electronic device 101 and/or the external electronic device 102 may perform the process for providing the notification to the user 501 and/or the other user 601 based on determining that the other user 601 has an intention to use the external electronic device 102, and identifying that the other user 601 approaches the external electronic device 102.

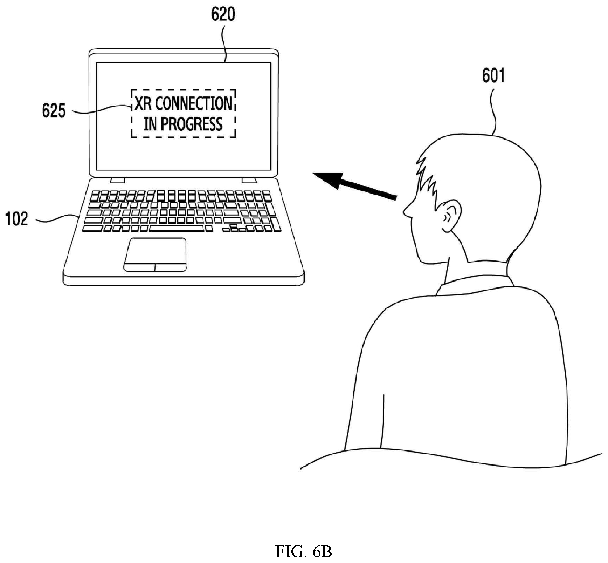

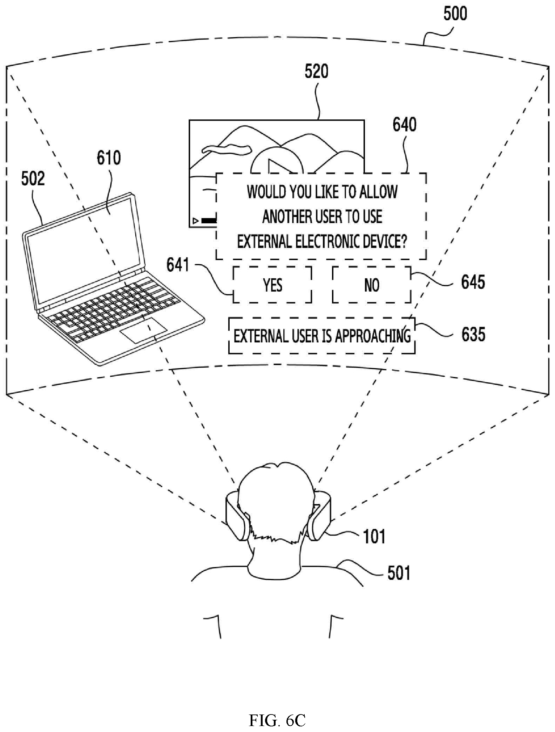

Hereinafter, an operation of the external electronic device 102 providing a notification to the other user 601 may be described with reference to FIG. 6B. Hereinafter, an operation of the electronic device 101 providing a notification to the user 501 may be described with reference to FIG. 6C.

FIG. 6B illustrates an example of a screen displayed by an external electronic device according to an approach of another user during a communication connection between an electronic device and the external electronic device in an embodiment.

FIG. 6B may be described with reference to components of the electronic device 101 and the external electronic device 102 of FIG. 4. FIG. 6B may be described with reference to FIGS. 5A to 5D.

In an embodiment, the external electronic device 102 may identify an approach of the other user 601 to the external electronic device 102. For example, during a communication connection between the electronic device 101 and the external electronic device 102 (or while the external electronic device 102 transmits data (e.g., data indicating the screen 510) for rendering the screen 520 to the electronic device 101), the external electronic device 102 may monitor other users approaching the external electronic device 102. For example, the external electronic device 102 may identify an approach of the other user 601 to the external electronic device 102 via a sensor 475. For example, the external electronic device 102 may identify the approach of the other user 601 to the external electronic device 102 based on a signal from the electronic device 101. For example, the signal from the electronic device 101 may indicate that the other user 601 approaches the external electronic device 102.

In an embodiment, the external electronic device 102 may display a screen 620 including a visual object 625 indicating that the external electronic device 102 is in use via the user 501 on the display 465, based on identifying that the other user 601 approaches the external electronic device 102. According to an embodiment, while transmitting data associated with the screen 510 to the electronic device 101 and maintaining the display of the screen 510, the external electronic device 102 may replace the screen 510 with the screen 620 based on identifying that the other user 601 approaches the external electronic device 102.

In an embodiment, the external electronic device 102 may display the screen 620 including the visual object 625 indicating that the external electronic device 102 is in use via the user 501 on the display 465, based on identifying that the other user 601 is determined to have an intention to use the external electronic device 102, and the other user 601 approaches the external electronic device 102. In an embodiment, the visual object 625 may replace a visual object (e.g., the visual object 550 of FIG. 5D). For example, the external electronic device 102 may replace the visual object 550 being displayed with the visual object 625 based on identifying that the other user 601 approaches the external electronic device 102. In an embodiment, the visual object 625 may be an image (e.g., an icon) indicating that the external electronic device 102 is linked with the electronic device 101 as well as text such as "XR connection in progress". In an embodiment, the visual object 625 may be not only include text such as "XR connection in progress", but also various guide phrases (e.g., "Currently performing mirroring operation via XR." "Access is restricted because XR of a user is currently using this device." "Access is restricted because user AAA is currently using this device.") indicating a specific state (or a situation) of the external electronic device 102. In an embodiment, the visual object 625 may be displayed clearer than the visual object 550 in the external electronic device 102. However, it is not limited thereto. For example, the external electronic device 102 may display the screen 620 including the visual object 625 indicating that the external electronic device 102 is in use via the user 501 on the display 465 based on receiving a user input from the other user 601 to the external electronic device 102. For example, the external electronic device 102 may display the screen 620 including the visual object 625 indicating that the external electronic device 102 is in use via the user 501 based on identifying that the other user 601 approaches the external electronic device 102 and/or a user input of the other user 601 to the external electronic device 102 is received. In an embodiment, a user input to the external electronic device 102 may be a user input to an input module (e.g., the input module 150 of FIG. 1) (e.g., a touch screen, a keyboard, or a touch pad) in the external electronic device 102. In an embodiment, a user input to the external electronic device 102 may be a user input to the other electronic device (e.g., the keyboard, the touchpad, the mouse, the remote control, and the stylus) outside the external electronic device 102 but communicatively coupled to the external electronic device 102. In an embodiment, the user input to the external electronic device 102 may include transforming (e.g., changing a spreading angle (between two portions of the external electronic device 102 such as a display and keyboard, a first display and second display, etc.) of the external electronic device 102) the external electronic device 102. For example, when the external electronic device 102 has a form that can be opened and closed, opening the external electronic device 102 or increasing the opening of the external electronic device 102 is recognized as a user input to the external electronic device 102.

In an embodiment, whether a user input to the external electronic device 102 is a user input of the other user 601 may be identified based on an image captured by the external electronic device 102 via the camera 485 of the external electronic device 102. In an embodiment, the external electronic device 102 may distinguish objects included in the image captured via the camera 485 into the user 501 and/or the other user 601 based on an object recognition algorithm. In an embodiment, the external electronic device 102 may identify an object in which feature points (or a feature map) among objects identified in the image obtained via the camera 485 are the same as feature points (or a feature map) of the user 501 registered in the external electronic device 102, as an object indicating the user 501. In an embodiment, the external electronic device 102 may identify an object in which feature points (or a feature map) among the objects identified in the image obtained via the camera 485 are different from feature points (or a feature map) of the user 501 registered in the external electronic device 102 as objects indicating the other user 601 other than the user 501. In an embodiment, the external electronic device 102 may distinguish a user input from a user identified as the user 501 from a user input of a user identified as the other user 601 based on distinguishing the objects included in the image captured via the camera 485 as the user 501 and/or the other user 601.

In an embodiment, the external electronic device 102 may identify a user closer to the external electronic device 102 among the user 501 and the other user 601 identified based on the image captured via the camera 485. In an embodiment, the external electronic device 102 may identify that the other user 601 is closer to the external electronic device 102 based on identifying that the user 501 is obscured by the other user 601. In an embodiment, the external electronic device 102 may identify that the user 501 is closer to the external electronic device 102 based on identifying that the other user 601 is obscured by the user 501. In an embodiment, the external electronic device 102 may identify that a user input identified in a state where the other user 601 is closer to the external electronic device 102 is inputted by the other user 601. According to an embodiment, the identification of the user closer to the external electronic device 102 among the user 501 and the other user 601 may be identified by a distance between the electronic device 101 and the external electronic device 102 and a distance between an electronic device (e.g., the other electronic device) possessed by the other user 601 and the external electronic device 102. In an embodiment, a distance may be identified by the external electronic device 102 based on a distance measurement algorithm (e.g., a UWB-based positioning algorithm).

In an embodiment, whether a user input to the external electronic device 102 is a user input of the other user 601 may be identified based on a distance between the external electronic device 102 and the user. In an embodiment, the external electronic device 102 may identify the distance between the external electronic device 102 and the user based on the distance measurement algorithm (e.g., the positioning algorithm based on UWB). In an embodiment, the external electronic device 102 may identify the user input as a user input of the other user 601 based on the distance being greater than or equal to a reference distance. In an embodiment, the external electronic device 102 may identify the user input as the user input of the user 501 based on the distance being less than the reference distance.

In an embodiment, while displaying the screen 620 (or while the other user 601 approaches the external electronic device 102), the external electronic device 102 may receive a user input. In an embodiment, while displaying the screen 620 (or while the other user 601 approaches the external electronic device 102) the external electronic device 102 may process the received user input differently according to whose user's input it is. For example, while displaying the screen 620 (or while another user 601 approaches the external electronic device 102), the external electronic device 102 may perform a function according to a user input based on determining that the received user input is a user input of the user 501 who has a right to use to the external electronic device 102. For example, while displaying the screen 620 (or while the other user 601 approaches the external electronic device 102), the external electronic device 102 may not perform a function according to the user input based on determining that the received user input is a user input of the other user 601 who does not have the right to use the external electronic device 102. In an embodiment, a user input may be a user input via an input module (e.g., a touch screen, a keyboard, a mouse, a touch pad, a stylus, and a remote control) linked to the external electronic device 102. In an embodiment, a user input may include transforming (e.g., changing a spreading angle (between two portions such as a display and keyboard, a first display and second display, etc.) of the external electronic device 102) the external electronic device 102.

In an embodiment, while displaying the screen 620 (or while the other user 601 approaches the external electronic device 102), the external electronic device 102 may identify a user input for terminating the external electronic device 102 of the other user 601. For example, the user input for terminating the external electronic device 102 may be a (pressing) user input to a power button of the external electronic device 102. For example, the user input for terminating the external electronic device 102 may be to close the external electronic device 102. In an embodiment, the external electronic device 102 may ignore the user input for terminating the external electronic device 102 of the other user 601. In an embodiment, the external electronic device 102 may maintain power of the external electronic device 102 in an on-state despite the user input for terminating the external electronic device 102 of the other user 601. In one or more embodiments, when receiving the user input for terminating the external electronic device 102 during a communication connection between the electronic device 101 and the external electronic device 102 (or while the external electronic device 102 transmits data of the screen 510 for rendering the screen 520 on the electronic device 101), the external electronic device 102 can ignore the user input and maintain power to the external electronic device 102. Once the communication connection between the electronic device 101 and the external electronic device 102 is disconnected, the external electronic device 102 can then execute the user input and be powered off.

In an embodiment, the external electronic device 102 may transmit a signal indicating that the other user 601 approaches the external electronic device 102 to the electronic device 101 via the communication circuitry 495. In an embodiment, the external electronic device 102 may transmit the signal indicating that the other user 601 approaches the external electronic device 102 to the electronic device 101 via the communication circuitry 495 based on displaying the screen 620 (or identifying that the other user 601 approaches the external electronic device 102).

In an embodiment, the external electronic device 102 may transmit the signal indicating that the other user 601 approaches the external electronic device 102 to the electronic device 101 via the communication circuitry 495, based on determining that the other user 601 has an intention to use the external electronic device 102, and identifying that the other user 601 approaches the external electronic device 102. In an embodiment, the external electronic device 102 may transmit the signal indicating that the other user 601 approaches the external electronic device 102 via the communication circuitry 495, based on identifying that the user input to the external electronic device 102 of the other user 601 is identified and that the other user 601 approaches the external electronic device 102. In an embodiment, the external electronic device 102 may transmit a signal to the electronic device 101 querying the other user 601 whether to allow the other user 601 to use the external electronic device 102 via the communication circuitry 495 based on displaying the screen 620 (or identifying that the other user 601 approaches the external electronic device 102).

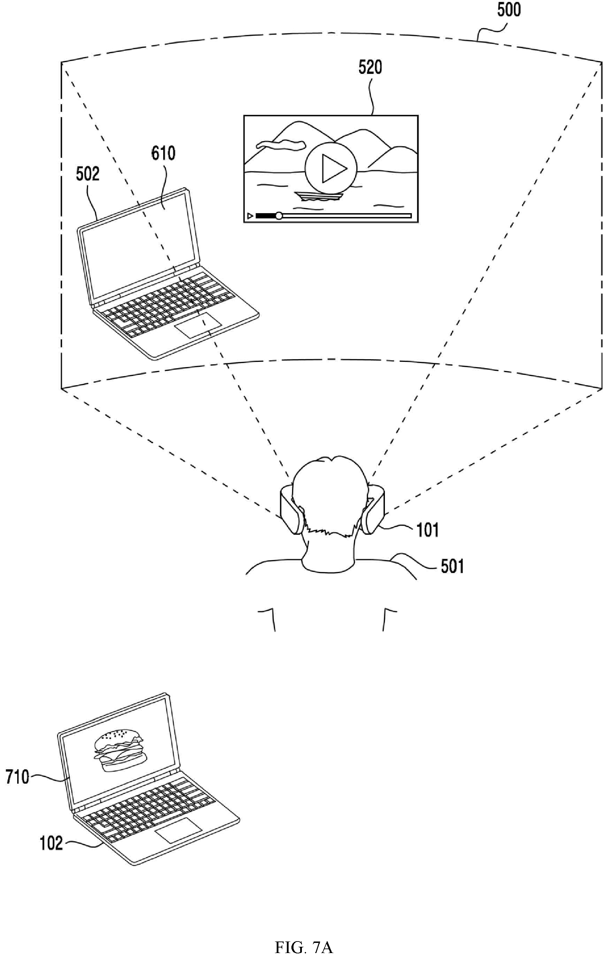

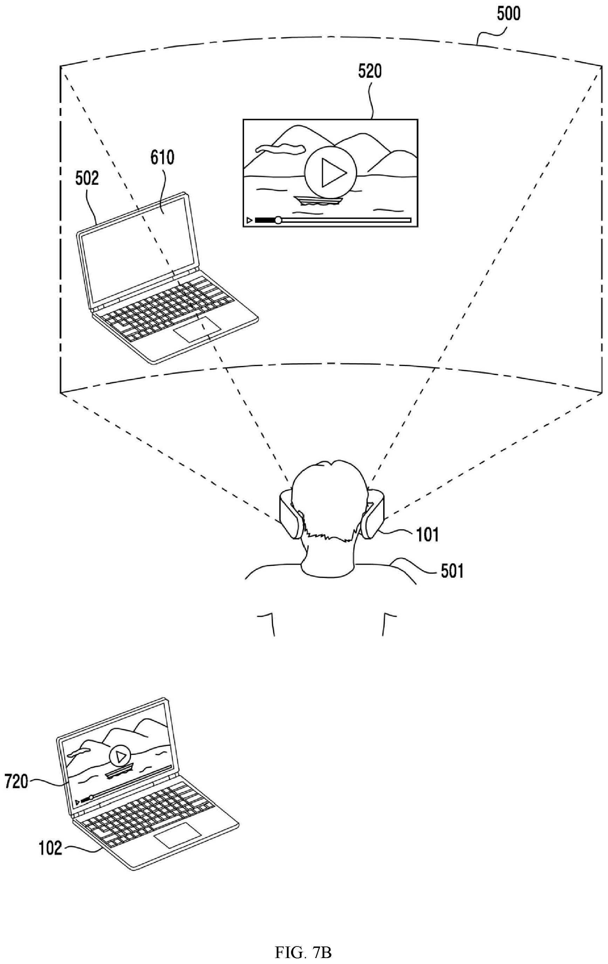

In an embodiment, the external electronic device 102 may display another screen (e.g., a screen 710 of FIG. 7A or a screen 720 of FIG. 7B) other than the screen 620 on the display 465 based on receiving a response allowing the other user 601 to use the external electronic device 102 from the electronic device 101. In an embodiment, the other screen may be a screen for providing a usage environment different from a usage environment provided to the user 501 via the screen 510. In an embodiment, the other screen may be a screen for a multi-desktop. In an embodiment, the other screen may be the same screen as the screen 510.

In an embodiment, the external electronic device 102 may maintain a display of the screen 620 based on receiving a response from the electronic device 101 that does not allow use of the external electronic device 102 to the other user 601. In an embodiment, the external electronic device 102 may maintain the display of the screen 620 until the other user 601 deviates from (or moves away from) the external electronic device 102 based on receiving the response from the electronic device 101 that does not allow the use of the external electronic device 102 by the other user 601 from the electronic device 101. In an embodiment, while maintaining the display of the screen 620, the external electronic device 102 may ignore a user input from the other user 601 to the external electronic device 102.

As described above, the external electronic device 102 may decrease an attempt by the other user 601 to use the external electronic device 102 by displaying a screen indicating that the external electronic device 102 is in use by the user 501 while the user 501 is using the external electronic device 102 via the FOV 500. In addition, the external electronic device 102 may decrease hindrance (or interruption) of the user 501 from using the external electronic device 102 by ignoring a user input of the other user 601 to the external electronic device 102 while the user 501 is using the external electronic device 102 via the FOV 500.

FIG. 6C illustrates an example of a screen displayed by an electronic device according to an approach of another user during a communication connection between an electronic device and the external electronic device in an embodiment.

FIG. 6C may be described with reference to components of the electronic device 101 and the external electronic device 102 of FIG. 4. FIG. 6C may be described with reference to FIGS. 5A to 5D.

In an embodiment, the electronic device 101 may identify an approach of the other user 601 to the external electronic device 102. For example, during the communication connection between the electronic device 101 and the external electronic device 102 (or while the external electronic device 102 transmits data (e.g., the data indicating the screen 510) for rendering the screen 520 to the electronic device 101), the external electronic device 102 may monitor other users approaching the external electronic device 102. For example, the electronic device 101 may identify the approach of the other user 601 to the external electronic device 102 via a sensor 470. For example, the electronic device 101 may identify the approach of the other user 601 to the external electronic device 102 based on a signal from the external electronic device 102. For example, the signal from the external electronic device 102 may indicate that the other user 601 approaches the external electronic device 102.

In an embodiment, the electronic device 101 may display, on a display 460, a visual object 635 indicating that the other user 601 is approaching the external electronic device 102 based on identifying that the other user 601 is approaching the external electronic device 102. In an embodiment, the electronic device 101 may display, on the display 460, the visual object 635 indicating that the other user 601 is approaching the external electronic device 102 based on identifying that the other user 601 is determined to have an intention to use the external electronic device 102 and the other user 601 is approaching the external electronic device 102. In an embodiment, the visual object 635 may be displayed around an area where a gaze of the user 501 is located.

In an embodiment, the electronic device 101 may display, on the display 460, a visual object 640 querying whether to allow the other user 601 to use the external electronic device 102 based on identifying that the other user 601 approaches the external electronic device 102. In an embodiment, the electronic device 101 may display, on the display 460, the visual object 640 querying whether to allow the other user 601 to use the external electronic device 102 based on identifying that the other user 601 is determined to have an intention to use the external electronic device 102, and the other user 601 approaches the external electronic device 102. In an embodiment, the electronic device 101 may display, on the display 460, the visual object 640 querying whether to allow the other user 601 to use the external electronic device 102 based on receiving a signal from the external electronic device 102 querying whether to allow the other user 601 to use the external electronic device 102. In an embodiment, the visual object 640 may be displayed in an area where a gaze of the user 501 is located.

In an embodiment, the electronic device 101 may transmit a response allowing the user 601 to use the external electronic device 102 to the external electronic device 102 via the communication circuitry 490, based on a user input selecting the visual object 641 to allow the other user 601 to use the external electronic device 102. In an embodiment, the external electronic device 102 may display to the other user 601 another screen (e.g., a screen 710 of FIG. 7A or a screen 720 of FIG. 7B) other than the screen 620 on the display 465 based on receiving the response allowing the use of the external electronic device 102 by the other user 601 from the electronic device 101.

In an embodiment, the electronic device 101 may transmit a response that does not allow the other user 601 to use of the external electronic device 102 to the external electronic device 102 via the communication circuitry 490, based on a user input of selecting a visual object 645 for not allowing the use of the external electronic device 102 to the other user 601. In an embodiment, the external electronic device 102 may maintain a display of the screen 620 based on receiving a response from the electronic device 101 that does not allow the other user 601 to use of the electronic device 101. In an embodiment, while maintaining the display of the screen 620, the external electronic device 102 may ignore a user input from the other user 601 to the external electronic device 102. However, it is not limited thereto. For example, the external electronic device 102 may change a display of the visual object 625 in the screen 620 based on receiving the response from the electronic device 101 that does not allow the use of the electronic device 101 to the other user 601. For example, the external electronic device 102 may display another visual object indicating that a communication connection between the external electronic device 102 and the electronic device 101 is necessary for use by the user 501 on the external electronic device 102 instead of the visual object 625 in the screen 620 based on receiving a response from the electronic device 101 that does not allow the use of the electronic device 101 to the other user 601.

As described above, the electronic device 101 may guide the user 501 that the other user 601 intends to use the external electronic device 102. In addition, the electronic device 101 may query the user 501 that the other user 601 intends to use external electronic device 102 and inquire about granting or denying permission to the other user 601. Accordingly, the electronic device 101 may determine whether to allow the other user 601 to use the external electronic device 102 by transmitting an intention of the other user 601 to the user 501 and receiving a response from the user 501.

FIG. 7A illustrates a situation in which another user uses an external electronic device during a communication connection between an electronic device and the external electronic device in an embodiment.

FIG. 7A may be described with reference to FIGS. 4 to 6C. FIG. 7A may illustrate a situation after an electronic device 101 transmits a response to an external electronic device 102 to allow another user 601 to use the external electronic device 102, based on a user input of selecting a visual object 641 for allowing use of the external electronic device 102 to the other user 601 in FIG. 6C.

Referring to FIG. 7A, the external electronic device 102 may display another screen 710 other than a screen 520 for use by the other user 601 for the external electronic device 102. In an embodiment, the other screen 710 may indicate a usage environment different from the screen 520 indicating a usage environment in which a user 501 uses the external electronic device 102 within a FOV 500 of the electronic device 101. In an embodiment, the external electronic device 102 may transmit data for displaying the screen 520 for the user 501 within the FOV 500 to the electronic device 101, while simultaneously displaying the other screen 710 for the other user 601 on a display 465, according to a multi-desktop.

In an embodiment, the other screen 710 may be displayed in response to a user account of the other user 601 being logged in to the external electronic device 102. In an embodiment, the external electronic device 102 may display a screen requesting the other user 601 to log in based on receiving a response allowing the user 601 to use the external electronic device 102. In an embodiment, the external electronic device 102 may display the screen 710 on the display 465 based on the other user 601 inputting their user account. However, it is not limited thereto. For example, the other screen 710 may be displayed without the user account of the other user 601 being logged into the external electronic device 102. In an embodiment, the external electronic device 102 may immediately display the other screen 710 without displaying a screen requesting login based on receiving a response allowing the user 601 to use the external electronic device 102.

In an embodiment, the external electronic device 102 may apply a user input only to one of a usage environment for the user 501 or a usage environment for the other user 601.

In an embodiment, the external electronic device 102 may update the screen 520 displayed in the usage environment for the user 501 based on identifying that the user input is a user input of the user 501. In an embodiment, based on the user input of the user 501, the external electronic device 102 may perform a function according to the user input, thereby updating the screen 520 displayed in the usage environment for the user 501.

In an embodiment, the external electronic device 102 may update the screen 710 displayed in the usage environment for the other user 601 based on identifying that the user input is a user input of the other user 601. In an embodiment, based on the user input of the other user 601, the external electronic device 102 may perform a function according to the user input, thereby updating the screen 710 displayed in the usage environment for the other user 601.

As described above, as the external electronic device 102 provides different usage environments to the user 501 and the other user 601, the user 501 and the other user 601 may simultaneously use the external electronic device 102 without hindering (or interrupting) each other.

FIG. 7B illustrates a situation in which another user uses an external electronic device during a communication connection between an electronic device and the external electronic device in an embodiment.

FIG. 7B may be described with reference to FIGS. 4 to 6C. FIG. 7B may illustrate a situation after the electronic device 101 transmits, to the external electronic device 102, a response of allowing the user 601 to use the external electronic device 102 based on a user input for selecting the visual object 641 for allowing the use of the external electronic device 102 to the other user 601, in FIG. 6C.

Referring to FIG. 7B, the external electronic device 102 may display another screen 720 corresponding to a screen 520 for use by the other user 601 for the external electronic device 102. In an embodiment, the other screen 720 may indicate the same usage environment as the screen 520 indicating a usage environment in which the user 501 uses the external electronic device 102 within a FOV 500 of the electronic device 101. In an embodiment, the external electronic device 102 may transmit data for displaying the screen 520 for the user 501 within the FOV 500 to the electronic device 101 while simultaneously displaying the other screen 720 for the other user 601 on a display 465, according to a multi-desktop.

In an embodiment, the other screen 720 may be displayed in response to a user account of the other user 601 being logged into the external electronic device 102. In an embodiment, the external electronic device 102 may display a screen requesting the other user 601 to log in based on receiving a response allowing the user 601 to use the external electronic device 102. In an embodiment, the external electronic device 102 may display the screen 720 on the display 465 based on the other user 601 inputting their user account. However, it is not limited thereto. For example, the other screen 720 may be displayed without the user account of the other user 601 being logged into the external electronic device 102. In an embodiment, the external electronic device 102 may immediately display the other screen 720 without displaying a screen requesting login based on receiving the response allowing the user 601 to use the external electronic device 102.

In an embodiment, the external electronic device 102 may apply a user input to both a usage environment for the user 501 and a usage environment for the other user 601.

In an embodiment, the external electronic device 102 may update (both) the screen 520 displayed in the usage environment for the user 501 and the screen 720 displayed in the usage environment for the other user 601, based on identifying that the user input is a user input of the user 501. In an embodiment, the external electronic device 102 may update the screen 520 displayed in the usage environment for the user 501 and the screen 720 displayed in the usage environment for the other user 601 based on the user input of the user 501. In an embodiment, the external electronic device 102 may update (both) the screen 520 displayed in the usage environment for the user 501 and the screen 720 displayed in the usage environment for the other user 601 based on the user input of the other user 601.

As described above, as the external electronic device 102 provides the same usage environment to (both) the user 501 viewing the display 460 of electronic device 101 and the other user 601 viewing the display 465 of external electronic device 102, the user 501 and the other user 601 may use the external electronic device 102 simultaneously by collaborating with each other.

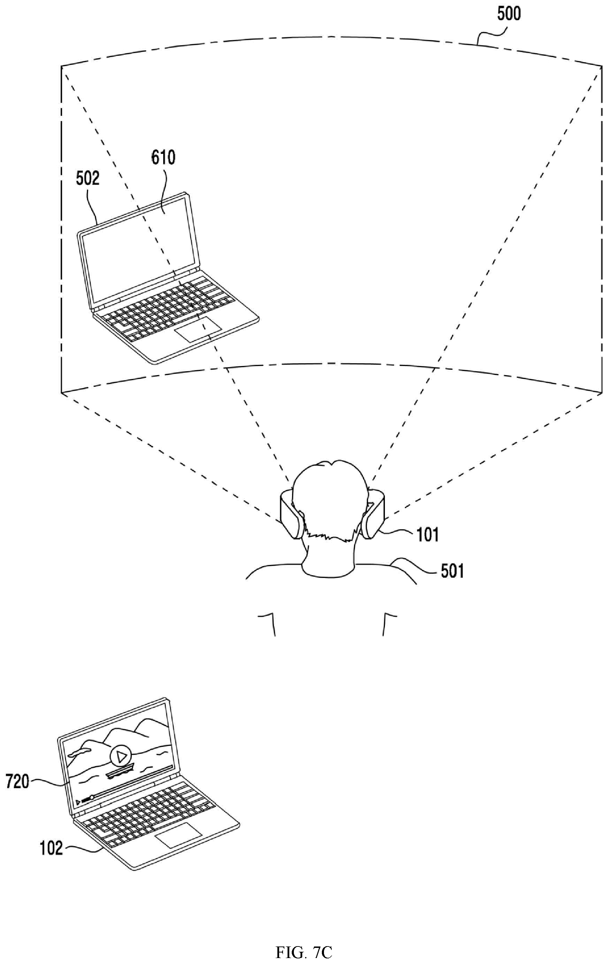

FIG. 7C illustrates a situation in which another user uses an external electronic device during a communication connection between an electronic device and the external electronic device in an embodiment.

FIG. 7C may be described with reference to FIGS. 4 to 6C. FIG. 7C may illustrate a situation after the electronic device 101 transmits, to the external electronic device 102, a response of allowing the user 601 to use the external electronic device 102 based on a user input for selecting the visual object 641 for allowing the use of the external electronic device 102 to the other user 601, in FIG. 6C.

Referring to FIG. 7C, the external electronic device 102 may display the other screen 720 corresponding to a screen 520 for use by the other user 601 for the external electronic device 102. In an embodiment, the external electronic device 102 may display the other screen 720 so that only the other user 601 can view the other screen 720, or the other user 601 may use the external electronic device 102. For example, the external electronic device 102 may not transmit data for displaying the screen 520 for the user 501 within the FOV 500 to the electronic device 101, while simultaneously displaying the other screen 720 for the other user 601 on the display 465.

In an embodiment, the other screen 720 may be displayed in response to a user account of the other user 601 being logged into the external electronic device 102. In an embodiment, the external electronic device 102 may display a screen requesting the other user 601 to log in based on receiving a response allowing the user 601 to use the external electronic device 102. In an embodiment, the external electronic device 102 may display the screen 720 on the display 465 based on the other user 601 inputting their user account. However, it is not limited thereto. For example, the other screen 720 may be displayed without the user account of the other user 601 being logged into the external electronic device 102. In an embodiment, the external electronic device 102 may immediately display the other screen 720 without displaying a screen requesting login based on receiving the response allowing the user 601 to use the external electronic device 102.

As described above, the external electronic device 102 may provide a usage environment only to the other user 601, may provide a different usage environment to the other user 601 and the user 501, and/or may provide the same usage environment to both the other user 601 and the user 501.

FIG. 8 is a flowchart illustrating an operation of an electronic device according to an embodiment.

FIG. 8 may be described with reference to FIGS. 4 to 7C.

Referring to FIG. 8, in an operation 810, an electronic device 101 may establish a communication connection with an external electronic device 102. In an embodiment, the electronic device 101 may establish a communication connection with the external electronic device 102 via communication circuitry 490, based on a user input requesting the communication connection with the external electronic device 102. For example, the electronic device 101 may establish a communication connection with the external electronic device 102 selected from a list of electronic devices to which a user account of a user logged into the electronic device 101 is logged in. For example, the electronic device 101 may establish a communication connection with the external electronic device 102 selected from a list of electronic devices that have previously had a communication connection with the electronic device 101. For example, the electronic device 101 may establish a communication connection with the external electronic device 102 selected from a list of electronic devices that have transmitted an advertisement packet to the electronic device 101. In an embodiment, the communication connection between the electronic device 101 and the external electronic device 102 may be a communication connection based on short-range wireless communication (e.g., a WiFi, a Bluetooth, a BLE)

In an embodiment, the electronic device 101 may receive data associated with a screen 510 from the external electronic device 102 via the communication circuitry 490 based on the establishment of the communication connection with the external electronic device 102. In an embodiment, the data associated with the screen 510 may be data for generating a screen to be displayed via a display 460 of the electronic device 101. In an embodiment, the electronic device 101 may display a screen 520 via the display 460 based on receiving the data associated with the screen 510 from the external electronic device 102. For example, the electronic device 101 may display the screen 520 corresponding to the screen 510 within a FOV 500.

In an operation 820, the electronic device 101 may identify an approach of another user 601. For example, the electronic device 101 may identify the approach of the other user 601 to the external electronic device 102.

In an embodiment, the electronic device 101 may identify the approach of the other user 601 to the external electronic device 102 using a camera 480. For example, the electronic device 101 may identify the approach of the other user 601 to the external electronic device 102 from an image obtained using the camera 480. However, it is not limited thereto. For example, the electronic device 101 may identify another electronic device approaching the external electronic device 102 via the communication circuitry 490. For example, the electronic device 101 may identify that the other user 601 approaches the external electronic device 102 based on identifying the other electronic device approaching the external electronic device 102. For example, the electronic device 101 may identify the approach of the other electronic device to the external electronic device 102 as the approach of the other user 601 by using a communication technique (e.g., a UWB) to identify the other electronic device worn by the other user 601.

In an operation 830, the electronic device 101 may output a notification associated with another user. In an embodiment, the notification associated with the other user may include a notification outputted from the electronic device 101 for the user 501 and/or a notification outputted from the external electronic device 102 for the other user 601.

In an embodiment, the electronic device 101 may transmit a message to the external electronic device 102 to display a screen 620 including a visual object 625 indicating that the external electronic device 102 is in use via the user 501 based on identifying that the other user 601 approaches the external electronic device 102.

In an embodiment, the electronic device 101 may display a visual object 635 indicating that the other user 601 is approaching the external electronic device 102 on the display 460 based on identifying that the other user 601 approaches the external electronic device 102.

FIG. 9 is a flowchart illustrating an operation of an external electronic device according to an embodiment.

FIG. 9 may be described with reference to FIGS. 4 to 7C. Operations of FIG. 9 may be performed after the operations of FIG. 8.

Referring to FIG. 9, in an operation 910, an external electronic device 102 may receive a signal that allows use of the external electronic device 102 by another user 601.

In an embodiment, the external electronic device 102 may transmit a signal to an electronic device 101 querying (or asking) whether to allow the other user 601 use of the external electronic device 102 via communication circuitry 495 based on displaying a screen 620 (or identifying that the other user 601 approaches the external electronic device 102). In an embodiment, the electronic device 101 may display, on a display 460, a visual object 640 querying (or asking) whether to allow the other user 601 to use the external electronic device 102 based on receiving a signal querying whether to allow the other user 601 the use of the external electronic device 102, from the external electronic device 102.

In an embodiment, the external electronic device 102 may receive a response indicating whether to allow the other user 601 to use the external electronic device 102 from the electronic device 101. In an embodiment, the external electronic device 102 may receive a response indicating that the external electronic device 102 is allowed to be used by the other user 601 from the electronic device 101. In an embodiment, the external electronic device 102 may receive a response indicating that the use of the external electronic device 102 is not allowed to the other user 601 from the electronic device 101.

In an operation 920, the external electronic device 102 may display a screen based on a signal.

In an embodiment, the external electronic device 102 may display another screen (e.g., the screen 710 of FIG. 7A or the screen 720 of FIG. 7B) other than the screen 620 on a display 465 based on receiving a response allowing the other user 601 to use the external electronic device 102 from the electronic device 101. In an embodiment, the other screen may be a screen for providing a usage environment to the other user 601 that is different from a usage environment provided to a user 501 via a screen 510. In an embodiment, the other screen may be a screen for a multi-desktop. In an embodiment, the other screen presented to the other user 601 may be the same screen as the screen 510 presented to the user 501.

In an embodiment, the external electronic device 102 may maintain a display of the screen 620 based on receiving the response from the electronic device 101 that does not allow the use of the external electronic device 102 to the other user 601. In an embodiment, the external electronic device 102 may maintain the display of the screen 620 until the other user 601 deviates (or moves away) from the external electronic device 102 based on receiving the response from the electronic device 101 that does not allow the use of the external electronic device 102 by the other user 601 from the electronic device 101. In an embodiment, while maintaining the display of the screen 620, the external electronic device 102 may ignore a user input of the other user 601 to the external electronic device 102.

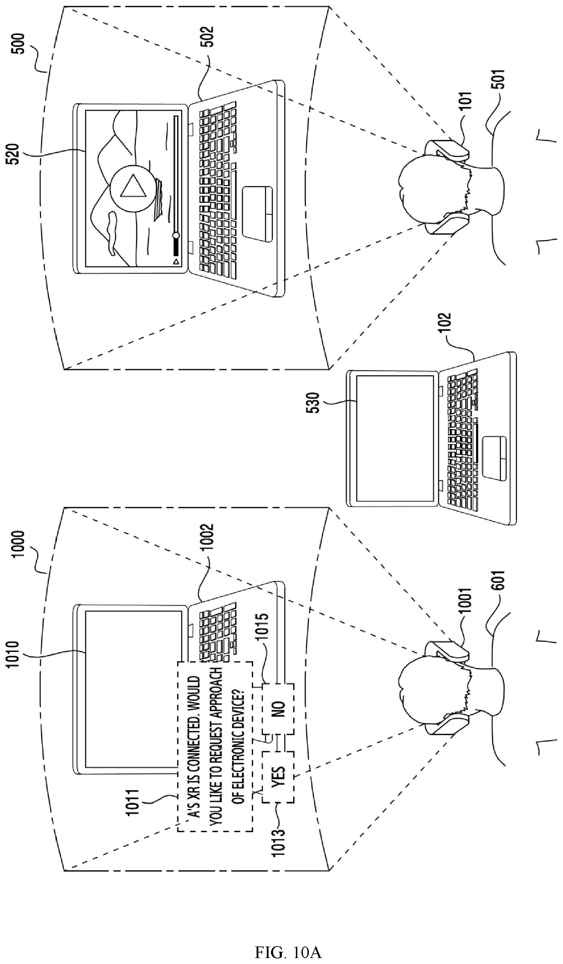

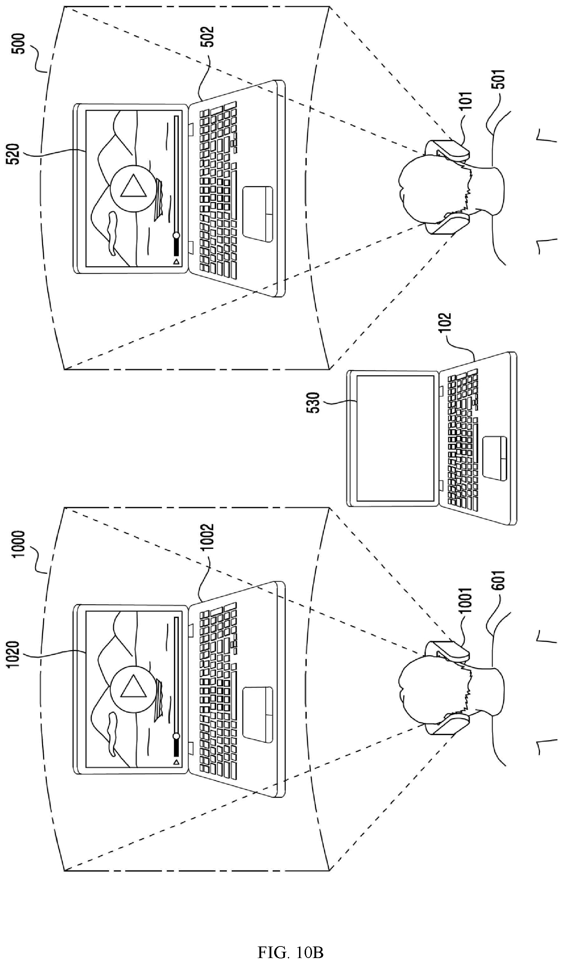

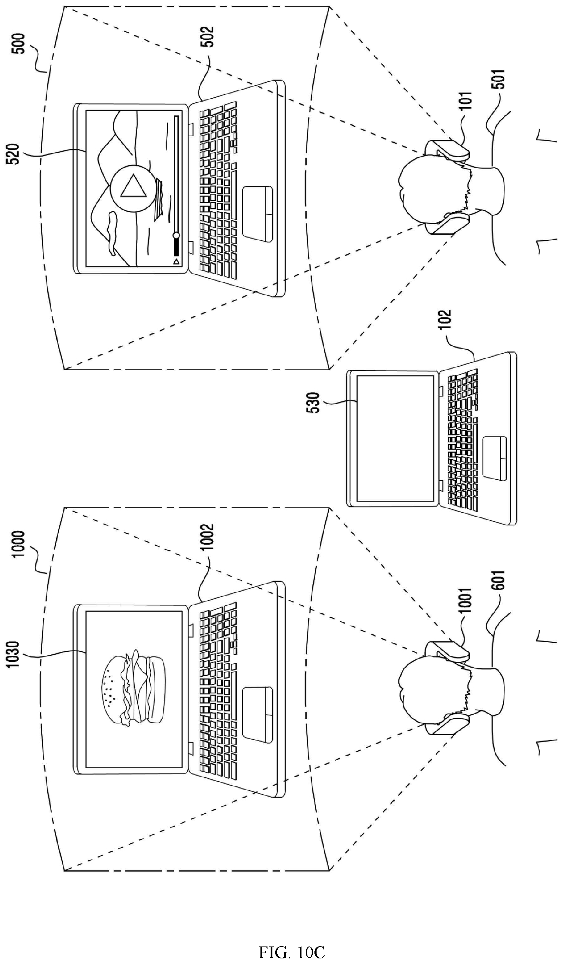

FIG. 10A illustrates a situation in which another electronic device displays a UI for a communication connection to an external electronic device in an embodiment. FIG. 10B illustrates a situation in which an electronic device and another electronic device are in a communication connection with an external electronic device in an embodiment. FIG. 10C illustrates a situation in which an electronic device and another electronic device are in a communication connection with an external electronic device in an embodiment.

FIGS. 10A to 10C may be described with reference to FIGS. 4 to 7C.

Referring to FIGS. 10A to 10C, another electronic device 1001 may be worn by another user 601. In an embodiment, while wearing the other electronic device 1001, the other user 601 may approach an external electronic device 102 to use the external electronic device 102.

In an embodiment, the external electronic device 102 may display a screen 620 including a visual object 625 indicating that the external electronic device 102 is in use via the user 501 on a display 465, based on identifying that the other user 601 approaches the external electronic device 102. In an embodiment, the other user 601 wearing the other electronic device 1001 may identify that the external electronic device 102 is in use via a visual object (e.g., XR in use) indicated by a visual object 1002 indicating the external electronic device 102 in a FOV 1000 visible via VST. In an embodiment, a screen 1010 indicated by the visual object 1002 may be a VST screen indicating a screen of the display 465 that is off as the display 465 of the external electronic device 102 is in an off state.

In an embodiment, the external electronic device 102 may transmit data indicating that the external electronic device 102 is in use to the other electronic device 1001 based on identifying that the other user 601 approaches the external electronic device 102. In an embodiment, the other electronic device 1001 may display a visual object 1011 (e.g., A's XR is connected. Would you like to request an approach of (or access to) the electronic device?) indicating that the external electronic device 102 is in use within the FOV 1000 based on receiving the data indicating that the external electronic device 102 is in use.

In an embodiment, the other user 601 may input an input for selecting one of virtual buttons 1013 and 1015 displayed together with the visual object 1011 to the other electronic device 1001. In an embodiment, the other electronic device 1001 may determine whether to establish the communication connection to the external electronic device 102 based on the input of selecting one of the virtual buttons 1013 and 1015. For example, the other electronic device 1001 may request a communication connection from the external electronic device 102 based on an input of selecting the virtual button 1013. For example, the other electronic device 1001 may not request a communication connection from the external electronic device 102 based on an input of selecting the virtual button 1015.

In an embodiment, while wearing the other electronic device 1001, the other user 601 may input a user input (e.g., the input of selecting the virtual button 1013) requesting establishment of a communication connection between the other electronic device 1001 and the external electronic device 102 to use the external electronic device 102. For example, the other user 601 may input the user input requesting the establishment of the communication connection between the other electronic device 1001 and the external electronic device 102 to display a screen generated by the external electronic device 102 within the FOV 1000 of the other electronic device 1001. For example, a user input requesting establishment of a communication connection may be a user input for selecting a visual object 1002 indicating the external electronic device 102 displayed in the FOV 1000 of the other electronic device 1001. For example, a user input for requesting establishment of a communication connection may be a user input for selecting the external electronic device 102 from a list of electronic devices to which a user account of a user logged in to the other electronic device 1001 is logged in. For example, a user input requesting establishment of a communication connection may be a user input of selecting the external electronic device 102 from a list of electronic devices that have previously had a communication connection with the other electronic device 1001. For example, a user input for requesting establishment of a communication connection may be a user input for selecting the external electronic device 102 from a list of electronic devices that have transmitted an advertisement packet to the other electronic device 1001.

In an embodiment, the other electronic device 1001 may request a communication connection from the external electronic device 102 via communication circuitry 495 based on a user input.

In an embodiment, the external electronic device 102 may receive a request for establishing a communication connection from the other electronic device 1001 via the communication circuitry 495. In an embodiment, while displaying a screen 520 or a screen 540, the external electronic device 102 may receive the request for establishing the communication connection from the other electronic device 1001. In an embodiment, the communication connection between the other electronic device 1001 and the external electronic device 102 may be a communication connection based on short-range wireless communication (e.g., a WiFi, a Bluetooth, a BLE). However, it is not limited thereto. For example, the communication connection between the other electronic device 1001 and the external electronic device 102 may be a communication connection based on long-distance wireless communication (e.g., a cellular network).

In an embodiment, the external electronic device 102 may transmit a signal querying the other user 601 whether to perform the communication connection between the other electronic device 1001 and the external electronic device 102 to the electronic device 101 via the communication circuitry 495, based on receiving a request for establishing the communication connection from the other electronic device 1001. In an embodiment, the external electronic device 102 may transmit a signal querying whether to allow the other user 601 to have use of the external electronic device 102 to the electronic device 101 via the communication circuitry 495, based on receiving the request for establishing the communication connection from the other electronic device 1001.

In an embodiment, the electronic device 101 may display a visual object 640 querying whether to allow the other user 601 to use the external electronic device 102 on the display 460 based on receiving a signal querying whether to allow the use of the external electronic device 102.

In an embodiment, based on a user input selecting a visual object 641 to allow the other user 601 to use the external electronic device 102, the electronic device 101 may transmit, to the external electronic device 102 via the communication circuitry 490, a response allowing the user 601 to use the external electronic device 102. In an embodiment, based on a user input selecting a visual object 645 not to allow the other user 601 to use the external electronic device 102, the electronic device 101 may transmit, to the external electronic device 102 via the communication circuitry 490, a response that does not allow the user 601 to use the external electronic device 102.

In an embodiment, the external electronic device 102 may determine whether to establish a communication connection with the other electronic device 1001 based on a response from the electronic device 101.

In an embodiment, the external electronic device 102 may establish the communication connection with the other electronic device 1001 of the other user 601 based on receiving a response allowing the other user 601 the use of the external electronic device 102 from the electronic device 101. In an embodiment, the external electronic device 102 may not establish the communication connection with the other electronic device 1001 of the other user 601 based on receiving a response from the electronic device 101 that does not allow the other user 601 the use of the external electronic device 102.

In an embodiment, the external electronic device 102 may transmit data associated with a screen to be displayed on the other electronic device 1001 via the communication circuitry 495 based on the establishment of the communication connection with the other electronic device 1001. In an embodiment, the data associated with the screen may be data for generating a screen to be displayed within the FOV 1000 of another electronic device 1001.

For example, referring to FIG. 10B, the external electronic device 102 may transmit data to display another screen 1020 corresponding to the screen 520 within the FOV 1000 to the other electronic device 1001, for use by the other user 601 on the external electronic device 102. In an embodiment, the other screen 1020 may indicate the same usage environment as the screen 520 indicating a usage environment in which the user 501 uses the external electronic device 102 within the FOV 500 of the electronic device 101. In an embodiment, the external electronic device 102 may transmit data to display the screen 520 for the user 501 within the FOV 500 to the electronic device 101 while simultaneously transmitting data to display another screen 1030 (e.g., depicted in FIG. 10C) for the other user 601 within the FOV 1000 to the other electronic device 1001.

For example, referring to FIG. 10C, the external electronic device 102 may transmit data to display the other screen 1030, other than the screen 520, within the FOV 1000 to the other electronic device 1001, for use by the other user 601 of the external electronic device 102. In an embodiment, the other screen 1030 may indicate a usage environment different from the screen 520, which indicates a usage environment where the user 501 uses the external electronic device 102 within the FOV 500 of the electronic device 101. In an embodiment, the external electronic device 102 may transmit data for displaying the screen 520 for the user 501 within the FOV 500 to the electronic device 101, while simultaneously transmitting data for displaying the other screen 1030 for the other user 601 within the FOV 1000 to the other electronic device 1001, according to a multi-desktop.

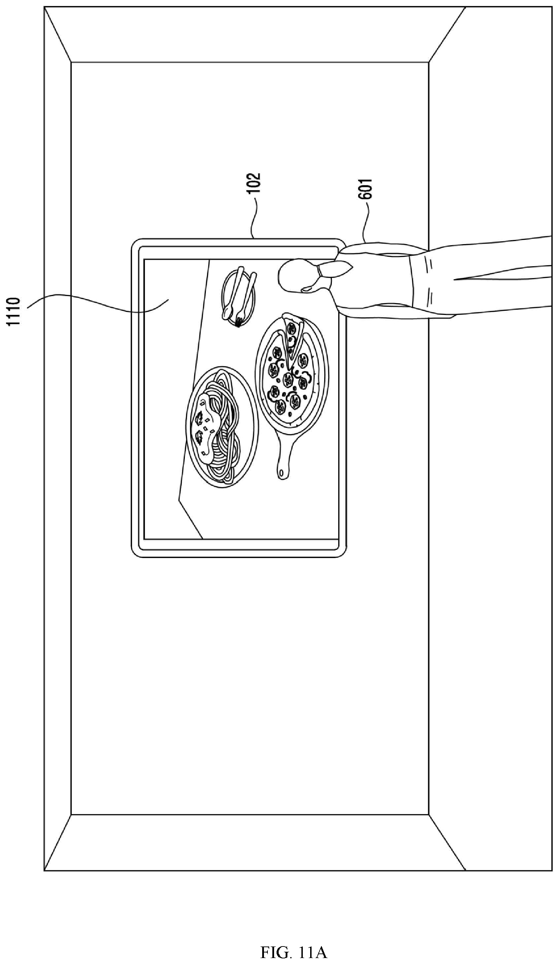

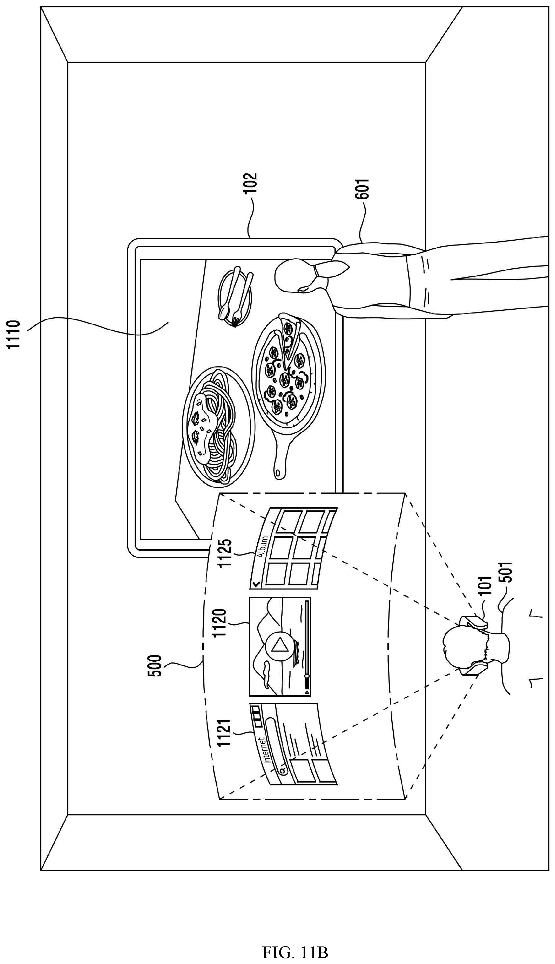

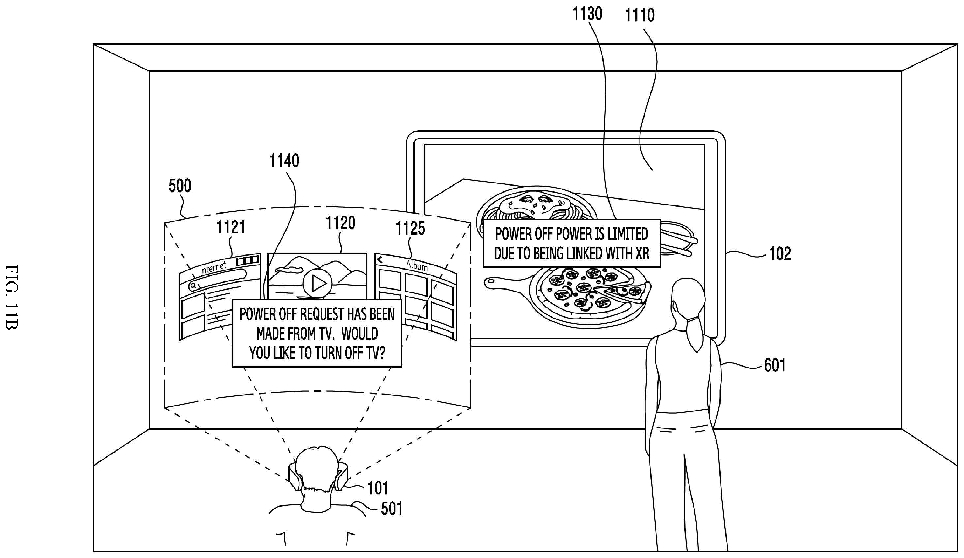

FIG. 11A illustrates a situation in which a user uses an external electronic device in an embodiment. FIG. 11B illustrates a situation in which an electronic device displays a screen received from an external electronic device in an embodiment. FIG. 11C illustrates UIs displayed according to an input requesting power off of an external electronic device in an embodiment.

FIGS. 11A to 11C may be described with reference to FIGS. 4 to 7C.

Referring to FIG. 11A, an external electronic device 102 may be a TV. For example, another user 601 may view content 1110 via the external electronic device 102. In an embodiment, the content 1110 may be a broadcast of a specific channel transmitted via the TV. In an embodiment, the content 1110 may be a specific medium (e.g., a photograph according to a frame function) displayed via the TV.

In an embodiment, the electronic device 101 may establish a communication connection with the external electronic device 102. In an embodiment, in a state that a user 501 wearing an electronic device 101 approaches the external electronic device 102, the electronic device 101 may establish the communication connection with the external electronic device 102 via communication circuitry 490, based on a user input requesting the communication connection with the external electronic device 102.

Referring to FIG. 11B, the electronic device 101 may receive data associated with a screen 1120 to be displayed within a FOV 500 from the external electronic device 102 via the communication circuitry 490 based on the establishment of the communication connection with the external electronic device 102. In an embodiment, the data associated with the screen 1120 may be data for generating a screen to be displayed via a display 460 of the electronic device 101. In an embodiment, the electronic device 101 may display the screen 1120 via the display 460 based on receiving the data associated with the screen 1120 from the external electronic device 102. In an embodiment, the electronic device 101 may display the screen 1120 together with other screens 1121 and 1125 that have been conventionally displayed within the FOV 500 via the display 460. In one or more embodiments, the other screens 1121 and 1125 can be displayed based on one or more software applications executed on the electronic device 101. In an embodiment, content in the screen 1120 may be the same as the content 1110 displayed on the external electronic device 102. However, it is not limited thereto. In an embodiment, the content in the screen 1120 may be different from the content 1110 displayed on the external electronic device 102. For example, the content in the screen 1120 may be a broadcast of a specific channel transmitted via the TV, and the content 1110 may be a specific medium (e.g., a picture according to a frame function) displayed via the TV.

Referring to FIG. 11B, while displaying the content 1110, the external electronic device 102 may transmit the data associated with the screen 1120 to the electronic device 101. In an embodiment, while transmitting the data associated with the screen 1120 to the electronic device 101, the external electronic device 102 may maintain a display of the content 1110. For example, while transmitting the data associated with the screen 1120 to the electronic device 101, the external electronic device 102 may not turn off a display 465.

In an embodiment, while transmitting data associated with the screen 1120 to the electronic device 101, the external electronic device 102 may receive an input (e.g., an input via a remote controller) for controlling the external electronic device 102 from the other user 601. In an embodiment, the external electronic device 102 may perform a function corresponding to an input for controlling the external electronic device 102, which is received while transmitting the data associated with the screen 1120 to the electronic device 101.

In an embodiment, while transmitting the data associated with the screen 1120 to the electronic device 101, the external electronic device 102 may receive an input (e.g., an input via a remote controller or an input of pressing a power button of the external electronic device 102) for turning off the external electronic device 102 from the other user 601. In an embodiment, the external electronic device 102 may ignore the input for turning off the electronic device 102, which is received while transmitting the data associated with the screen 1120 to the electronic device 101.

Referring to FIG. 11C, as the external electronic device 102 is linked with the electronic device 101, the external electronic device 102 may display a visual object 1130 indicating that a power off of the external electronic device 102 is limited, in response to the input for turning off the external electronic device 102. In an embodiment, the external electronic device 102 may not turn off the power of the external electronic device 102 in response to the input for turning off the external electronic device 102, which is received while transmitting data associated with the screen 1120 to the electronic device 101. In an embodiment, the visual object 1130 may indicate that the external electronic device 102 cannot be turned off due to being in a linked state with the electronic device 101.

In an embodiment, the external electronic device 102 may transmit data indicating that an input for turning off power of the external electronic device 102 is received to the electronic device 101 in response to the input for turning off the external electronic device 102, which is received while transmitting the data associated with the screen 1120 to the electronic device 101.

In an embodiment, the electronic device 101 may display a UI 1140 querying the user 501 whether to turn off the power of the external electronic device 102 within the FOV 500, based on the data indicating that the input for turning off the power of the external electronic device 102 is received. In an embodiment, the electronic device 101 may transmit a response indicating whether to turn off the power to the external electronic device 102 based on an input (e.g., a power-off request, a power-on maintenance request) to the UI 1140. In an embodiment, the external electronic device 102 may turn off the power of the external electronic device 102 or maintain the power of the external electronic device 102 based on a response received from the electronic device 101.

As described above, an electronic device 102 may comprise communication circuitry 495, a display 465, at least one processor 425 comprising processing circuitry, and memory 435, comprising one or more storage mediums, storing instructions. The instructions, when executed by the at least one processor 425 individually or collectively, may cause the electronic device 102 to display, via the display, a first screen. The instructions, when executed by the at least one processor 425 individually or collectively, may cause the electronic device 102 to establish, via the communication circuitry 495, a communication connection with a wearable device 101 worn by a user 501. The wearable device 101 may comprise displays 460 arranged toward eyes of the user 501 when worn by the user 501. The instructions, when executed by the at least one processor 425 individually or collectively, may cause the electronic device 102 to, during the communication connection, transmit, to the wearable device 101 via the communication circuitry 495, data associated with a mirror screen 520 corresponding to the first screen 510, such that the mirror screen 520 corresponding to the first screen 510 is displayed via the displays 460 of the wearable device 101. The instructions, when executed by the at least one processor 425 individually or collectively, may cause the electronic device 102 to identify an approach of another user 601 distinguished from the user 501 while the mirror screen 520 corresponding to the first screen 510 is displayed from the wearable device 101. The instructions, when executed by the at least one processor 425 individually or collectively, may cause the electronic device 102 to, based on identifying the approach of the another user 601, display, via the display 465, a second screen 540 indicating that the user 501 is using the electronic device 102.

The instructions, when executed by the at least one processor 425 individually or collectively, may cause the electronic device 102 to, while transmitting the data associated with the mirror screen 520 corresponding to the first screen 510 to the wearable device 101 via the communication circuitry 495, cease displaying the first screen 510 via the display 465. The instructions, when executed by the at least one processor 425 individually or collectively, may cause the electronic device 102 to, during a display of the first screen 510 being ceased, display the second screen 540 based on identifying the approach of the another user 601.

Ceasing a display of the first screen 510 via the display 465 may include operating the display 465 at low power.

The instructions, when executed by the at least one processor 425 individually or collectively, may cause the electronic device 102 to identify a user input to the input module 150 from the another user 601 while the mirror screen 520 corresponding to the first screen 510 is displayed from the wearable device 101. The instructions, when executed by the at least one processor 425 individually or collectively, may cause the electronic device 102 to cease performing a function according to the user input.

The instructions, when executed by the at least one processor 425 individually or collectively, may cause the electronic device 102 to, while the mirror screen 520 corresponding to the first screen 510 is displayed from the wearable device 101, identify the approach of the another user 601 based on an image obtained via a camera 485.

The instructions, when executed by the at least one processor 425 individually or collectively, may cause the electronic device 102 to, while the mirror screen 520 corresponding to the first screen 510 is displayed from the wearable device 101, identify, via the camera 485, an image. The instructions, when executed by the at least one processor 425 individually or collectively, may cause the electronic device 102 to identify a visual object indicating the another user 601 and a visual object indicating the user 501 within the image. The instructions, when executed by the at least one processor 425 individually or collectively, may cause the electronic device 102 to identify the approach of the another user 601, based on identifying that the visual object indicating the another user 601 is closer to the electronic device 101 than the visual object indicating the user 501.

The instructions, when executed by the at least one processor 425 individually or collectively, may cause the electronic device 102 to, while the mirror screen 520 corresponding to the first screen 520 is displayed from the wearable device 101, receive, from the wearable device 101 via the communication circuitry 495, data for identifying the approach of the another user 601. The instructions, when executed by the at least one processor 425 individually or collectively, may cause the electronic device 102 to identify the approach of the another user 601 based on the data for identifying the approach of the another user 601.

The instructions, when executed by the at least one processor 425 individually or collectively, may cause the electronic device 102 to, while the mirror screen 520 corresponding to the first screen 510 is displayed from the wearable device 101, receive, from the wearable device 101 via the communication circuitry 495, data for identifying the approach of the another user 601. The data for identifying the approach of the another user 601 may indicate whether the another user 601 identified by the wearable device 101 using an image captured by a camera of the wearable device 101 is in a state of approaching the electronic device 102. The instructions, when executed by the at least one processor 425 individually or collectively, may cause the electronic device 102 to identify the approach of the another user 601 based on the data for identifying the approach of the another user 601.

The instructions, when executed by the at least one processor 425 individually or collectively, may cause the electronic device 102 to, based on identifying the approach of the another user 601, transmit, to the wearable device 101 via the communication circuitry 495, a message for notifying the approach of the another user 601. The instructions, when executed by the at least one processor 425 individually or collectively, may cause the electronic device 102 to receive, from the wearable device 101 via the communication circuitry 495, a response to the message. The instructions, when executed by the at least one processor 425 individually or collectively, may cause the electronic device 102 to maintain a display of the second screen 540 while the another user 601 approaches the electronic device 102, based on the response to the message indicating that the another user 601 is not allowed to use the electronic device 102. The instructions, when executed by the at least one processor 425 individually or collectively, may cause the electronic device 102 to display a third screen 710 or 720 indicating that the another user 601 is able to use the electronic device 102, while the another user 601 approaches the electronic device 102, based on the response to the message indicating that the another user 601 is allowed to use the electronic device 102.

The instructions, when executed by the at least one processor 425 individually or collectively, may cause the electronic device 102 to cease performing a function according to a user input to the input module 150 from the another user 601, while maintaining a display of the second screen 540. The instructions, when executed by the at least one processor 425 individually or collectively, may cause the electronic device 102 to perform the function according to the user input to the input module 150 from the another user 601, while maintaining a display of the third screen 710 or 720.

The third screen 710 or 720 may correspond to the mirror screen 520 corresponding to the first screen 510. The instructions, when executed by the at least one processor 425 individually or collectively, may cause the electronic device 102 to receive a user input from the another user 601. The instructions, when executed by the at least one processor 425 individually or collectively, may cause the electronic device 102 to, based on the user input, update the third screen 710 or 720. The instructions, when executed by the at least one processor 425 individually or collectively, may cause the electronic device 102 to transmit, to the wearable device 101 via the communication circuitry 495, data for updating the mirror screen 520 corresponding to the first screen 510 displayed from the wearable device 101.

The third screen 710 or 720 may be different from the mirror screen 520 corresponding to the first screen 510. The instructions, when executed by the at least one processor 425 individually or collectively, may cause the electronic device 102 to receive, from the wearable device 101 via the communication circuitry 495, a user input of the user 510. The instructions, when executed by the at least one processor 425 individually or collectively, may cause the electronic device 102 to, based on the user input, transmit, to the wearable device 101 via the communication circuitry 495, data for updating the mirror screen 520 corresponding to the first screen 510 displayed from the wearable device 101, such that the mirror screen 520 corresponding to the first screen 510 between the mirror screen 520 corresponding to the first screen 510 and the third screen 710 or 720 is updated.

The instructions, when executed by the at least one processor 425 individually or collectively, may cause the electronic device 102 to, while displaying the second screen 540, receive, from another wearable device 101 via the communication circuitry 495, a request for a communication connection with the another wearable device 1001 worn by the another user 601. The another wearable device 1001 may comprise other displays 460 arranged toward eyes of the another user 601 when worn by the another user 601. The instructions, when executed by the at least one processor 425 individually or collectively, may cause the electronic device 102 to, based on receiving the request for the communication connection, transmit, to the wearable device 101 via the communication circuitry 495, a message querying whether to establish the communication connection with the another wearable device 1001. The instructions, when executed by the at least one processor 425 individually or collectively, may cause the electronic device 102 to receive, from the wearable device 101 via the communication circuitry 495, a response to the message. The instructions, when executed by the at least one processor 425 individually or collectively, may cause the electronic device 102 to maintain a display of the second screen 540 while the another user 601 approaches the electronic device 102, based on the response to the message indicating that the communication connection with the another wearable device 1001 is not allowed. The instructions, when executed by the at least one processor 425 individually or collectively, may cause the electronic device 102 to establish, via the communication circuitry 495, the communication connection with the another wearable device 1001, based on the response to the message indicating that the communication connection with the another wearable device 1001 is allowed.

The instructions, when executed by the at least one processor 425 individually or collectively, may cause the electronic device to cease transmitting of the data associated with the first screen 510 via the communication circuitry 495, based on the response to the message indicating that the communication connection is allowed.

The instructions, when executed by the at least one processor 425 individually or collectively, may cause the electronic device 102 to, during the communication connection with the wearable device 101 and the communication connection with the another wearable device 1001, transmit, to the wearable device 101 via the communication circuitry 495, the data associated with the mirror screen 520 corresponding to the first screen 510, such that the mirror screen 520 corresponding to the first screen 210 is displayed via the displays 460 of the wearable device 101. The instructions, when executed by the at least one processor 425 individually or collectively, may cause the electronic device 102 to transmit, to the another wearable device 1001 via the communication circuitry 495, another data associated with a third screen 710 of 720 different from the mirror screen 520 corresponding to the first screen 510, such that the third screen 710 or 720 is displayed via the other displays 460 of the another wearable device 1001.

As described above, a wearable device 101 may comprise communication circuitry 490, displays 460 arranged toward eyes of a user 501 when worn by the user 501, at least one processor 420 comprising processing circuitry, and memory 430, comprising one or more storage mediums, storing instructions. The instructions, when executed by the at least one processor 420 individually or collectively, may cause the wearable device 101 to establish, via the communication circuitry 490, a communication connection with an electronic device 102. The instructions, when executed by the at least one processor 420 individually or collectively, may cause the wearable device 101 to, during the communication connection, receive, from the electronic device 102, a mirror screen 520 corresponding to a first screen 510 that is displayed via a display 465 of the electronic device 120 for displaying, via the displays of the wearable device, data associated with the mirror screen corresponding to the first screen. The instructions, when executed by the at least one processor 420 individually or collectively, may cause the wearable device 101 to identify an approach to the electronic device by another user different from the user while the screen is displayed via the displays. The instructions, when executed by the at least one processor 420 individually or collectively, may cause the wearable device 101 to, based on identifying the approach of the another user, display, via the display, a user interface (UI) for querying whether to allow the another user to use the electronic device.

The instructions, when executed by the at least one processor 420 individually or collectively, may cause the wearable device 101 to, after displaying the UI, based on receiving a user input not to allow that the another user 601 uses the electronic device 102, transmit, to the electronic device 102 via the communication circuitry 490, a response such that the electronic device 102 displays, via the display 460, another screen indicating that the user 501 is using the electronic device 102.

A method described above may be performed by an electronic device 102 including communication circuitry 495 and a display 465. The method may comprise displaying, via the display, a first screen 510. The method may comprise establishing, via the communication circuitry 495, a communication connection with a wearable device 101 worn by a user 501. The wearable device 101 may comprise displays 460 arranged toward eyes of the user when worn by the user 501. The method may comprise, during the communication connection, transmitting, to the wearable device 101 via the communication circuitry 495, data associated with a mirror screen 520 corresponding to the first screen 510, such that the mirror screen 520 corresponding to the first screen 510 is displayed via the displays 460 of the wearable device 101. The method may comprise identifying an approach of another user 601 distinguished from the user 501 while the mirror screen 520 corresponding to the first screen 510 is displayed from the wearable device 101. The method may comprise, based on identifying the approach of the another user 601, displaying, via the display 465, a second screen 540 indicating that the user is using the electronic device 102.

The method may comprise, while transmitting the data associated with the mirror screen 520 corresponding to the first screen 510 to the wearable device 101 via the communication circuitry 495, ceasing displaying the first screen 510 via the display 465. The method may comprise displaying, while a display of the first screen 510 ceases, the second screen 540 based on identifying the approach of the another user 601.

The method may comprise, while the mirror screen 520 corresponding to the first screen 510 is displayed from the wearable display 101, identifying a user input to an input module 150 from the another user 601. The method may comprise ceasing performing a function according to the user input.

The method may comprise, based on identifying the approach of the another user 601, transmitting, to the wearable device 101 via the communication circuitry 495, a message for notifying the approach of the another user 601. The method may comprise receiving, from the wearable device 101 via the communication circuitry 495, a response to the message. The method may comprise maintaining a display of the second screen 540 while the another user 601 approaches the electronic device 102, based on the response to the message indicating that the another user 601 is not allowed to use the electronic device 102. The method may comprise displaying a third screen 710 or 720 indicating that the another user is able to use the electronic device 102, while the another user 601 approaches the electronic device 102, based on the response to the message indicating that the another user 601 is allowed to use the electronic device 102.

As described above, a non-transitory computer readable storage medium may store a program including instructions. The instructions, when executed by at least one processor 425 of an electronic device 102 including a display and communication circuitry 495, individually or collectively, may cause the electronic device 102 to display, via the display 465, a first screen 510. The instructions, when executed by the at least one processor 425 individually or collectively, may cause the electronic device 102 to establish, via the communication circuitry 495, a communication connection with a wearable device 101 worn by a user 501. The wearable device 101 may comprise displays 460 arranged toward eyes of the user 501 when worn by the user 501. The instructions, when executed by the at least one processor 425 individually or collectively, may cause the electronic device 102 to, during the communication connection, transmit, to the wearable device 101 via the communication circuitry 495, data associated with a mirror screen 520 corresponding to the first screen 510, such that the mirror screen 520 corresponding to the first screen 510 is displayed via the displays 460 of the wearable device 101. The instructions, when executed by the at least one processor 425 individually or collectively, may cause the electronic device to identify an approach of another user 601 distinguished from the user 501 while the mirror screen 520 corresponding to the first screen 510 is displayed from the wearable device101. The instructions, when executed by the at least one processor 425 individually or collectively, may cause the electronic device 102 to, based on identifying the approach of the another user 601, display, via the display 465, a second screen 540 indicating that the user is using the electronic device 102.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (102) comprising:
communication circuitry (495);
a display (465);
at least one processor (425) comprising processing circuitry; and
memory (435), comprising one or more storage mediums, and storing instructions,
wherein the instructions, when executed by the at least one processor (425) individually or collectively, cause the electronic device (102) to:
display, via the display (465), a first screen (510);
establish, via the communication circuitry (495), a communication connection with a wearable device worn by a user (501), the wearable device(101) comprising displays (460) viewable by the user (501);
during the communication connection, transmit, to the wearable device(101) via the communication circuitry (495), data associated with a mirror screen (520) corresponding to the first screen (510), such that the mirror screen (520) corresponding to the first screen (510) is to be displayed via the displays (460) of the wearable device(101);
identify an approach of another user (601) distinguished from the user (501) while the mirror screen (520) corresponding to the first screen (510) is to be displayed on the wearable device(101); and
based on identifying the approach of the another user (601), display, via the display (465), a second screen(540) indicating that the user (501) is using the electronic device (102).

2. The electronic device of claim 1, wherein the instructions, when executed by the at least one processor (425) individually or collectively, cause the electronic device (102) to:
while transmitting the data associated with the mirror screen (520) corresponding to the first screen (510) to the wearable device(101) via the communication circuitry (495), cease displaying the first screen (510) via the display (465); and
in response to the first screen (510) being ceased from displaying, display the second screen(540) based on identifying the approach of the another user (601).

3. The electronic device of claim 1, wherein the instructions, when executed by the at least one processor (425) individually or collectively, cause the electronic device (102) to:
while transmitting the data associated with the mirror screen (520) corresponding to the first screen (510) to the wearable device(101) via the communication circuitry (495), maintain displaying the first screen (510) via the display (465); and
in response to the first screen (510) being maintained, replace the first screen (510) with the second screen(540) based on identifying the approach of the another user (601).

4. The electronic device of claim 1, further comprising:
an input module(150);
wherein the instructions, when executed by the at least one processor (425) individually or collectively, cause the electronic device (102) to:
while the mirror screen (520) corresponding to the first screen (510) is to be displayed on the wearable device(101):
identify a user input to the input module(150) from the another user (601); and
cease performing a function according to the user input.

5. The electronic device of claim 1, comprising:
a camera(485);
wherein the instructions, when executed by the at least one processor (425) individually or collectively, cause the electronic device (102) to:
while the mirror screen (520) corresponding to the first screen (510) is to be displayed on the wearable device(101), identify, via the camera(485), an image;
identify a first visual object indicating the another user (601) and a second visual object indicating the user (501) within the image; and
identify the approach of the another user (601), based on identifying that the first visual object indicating the another user (601) is closer to the electronic device (101) than the second visual object indicating the user (501).

6. The electronic device of claim 1, wherein the instructions, when executed by the at least one processor (425) individually or collectively, cause the electronic device (102) to:
while the mirror screen (520) corresponding to the first screen (510) is to be displayed on the wearable device(101):
receive, from the wearable device(101) via the communication circuitry (495), other data for identifying the approach of the another user (601), the other data for identifying the approach of the another user (601) indicating whether the another user (601) identified by the wearable device(101) using an image captured by a camera of the wearable device(101) is in a state of approaching the electronic device (102); and
identify the approach of the another user (601) based on the other data for identifying the approach of the another user (601).

7. The electronic device of claim 1, wherein the instructions, when executed by the at least one processor (425) individually or collectively, cause the electronic device (102) to:
based on identifying the approach of the another user (601), transmit, to the wearable device(101) via the communication circuitry (495), a message for notifying the approach of the another user (601); and
receive, from the wearable device(101) via the communication circuitry (495), a response to the message; and
wherein the instructions, when executed by the at least one processor (425) individually or collectively, cause the electronic device (102) to:
maintain displaying the second screen(540) while the another user (601) approaches the electronic device (102), based on the response to the message indicating that the another user (601) is not allowed to use the electronic device (102); or
display a third screen (710, 720) indicating that the another user (601) is able to use the electronic device (102), while the another user (601) approaches the electronic device (102), based on the response to the message indicating that the another user (601) is allowed to use the electronic device (102).

8. The electronic device of claim 7, further comprising:
an input module(150);
wherein the instructions, when executed by the at least one processor (425) individually or collectively, cause the electronic device (102) to:
cease performing a function according to a user input to the input module(150) from the another user (601), while displaying of the second screen(540) is maintained; or
perform the function according to the user input to the input module(150) from the another user (601), while displaying the third screen (710, 720).

9. The electronic device of claim 7, wherein the third screen(710, 720) corresponds to the mirror screen (520) corresponding to the first screen (510); and
wherein the instructions, when executed by the at least one processor (425) individually or collectively, cause the electronic device (102) to:
receive a user input from the another user (601); and
based on the user input:
update the third screen (710, 720); and
transmit, to the wearable device(101) via the communication circuitry (495), the data for updating the mirror screen (520) corresponding to the first screen (510) to be displayed on the wearable device(101).

10. The electronic device of claim 7, wherein the third screen(710, 720) is different from the mirror screen (520) corresponding to the first screen (510); and
wherein the instructions, when executed by the at least one processor (425) individually or collectively, cause the electronic device (102) to:
receive, from the wearable device(101) via the communication circuitry (495), a user input of the user (501); and
based on the user input, transmit, to the wearable device(101) via the communication circuitry (495), the data for updating the mirror screen (520) corresponding to the first screen (510) to be displayed on the wearable device(101) such that the mirror screen (520) corresponding to the first screen (510) is updated while not updating the third screen (710, 720).

11. The electronic device of claim 1, wherein the instructions, when executed by the at least one processor (425) individually or collectively, cause the electronic device (102) to:
while displaying the second screen (540), receive, from another wearable device(1001) via the communication circuitry (495), a request for another communication connection with the another wearable device (1001) worn by the another user (601), the another wearable device (1001) comprising other displays (460) viewable by the another user (601) when worn by the another user (601);
based on receiving the request for the another communication connection, transmit, to the wearable device(101) via the communication circuitry (495), a message querying whether to establish the another communication connection with the another wearable device (1001);
receive, from the wearable device(101) via the communication circuitry (495), a response to the message;
maintain displaying of the second screen(540) while the another user (601) approaches the electronic device (102), based on the response to the message indicating that the another communication connection with the another wearable device (1001) is not allowed, and
establish, via the communication circuitry (495), the another communication connection with the another wearable device (1001), based on the response to the message indicating that the another communication connection with the another wearable device (1001) is allowed.

12. The electronic device of claim 11, wherein the instructions, when executed by the at least one processor (425) individually or collectively, cause the electronic device (102) to:
cease transmitting of the data associated with the mirror screen (520) corresponding to the first screen (510) via the communication circuitry (495), based on the response to the message indicating that the request for the another communication connection is allowed.

13. The electronic device of claim 11, wherein the instructions, when executed by the at least one processor (425) individually or collectively, cause the electronic device (102) to:
during the communication connection with the wearable device (101) and the another communication connection with the another wearable device (1001):
transmit, to the wearable device(101) via the communication circuitry (495), the data associated with the mirror screen (520) corresponding to the first screen (510), such that the mirror screen (520) corresponding to the first screen (510) is to be displayed via the displays (460) of the wearable device(101); and
transmit, to the another wearable device(1001) via the communication circuitry (495), another data associated with a third screen(710, 720) different from the mirror screen (520) corresponding to the first screen (510), such that the third screen(710, 720) is to be displayed via the other displays (460) of the another wearable device(1001).

14. A wearable device (101) comprising:
communication circuitry (490);
displays (460) viewable by a user (501) when worn by the user (501);
at least one processor (420) comprising processing circuitry; and
memory (430), comprising one or more storage mediums, storing instructions,
wherein the instructions, when executed by the at least one processor (420) individually or collectively, cause the wearable device (101) to:
establish, via the communication circuitry (490), a communication connection with an electronic device (102);
during the communication connection, receive, from the electronic device (102), data associated with a mirror screen (520) corresponding to a first screen (510) that is displayed on the electronic device (102), wherein the data is for displaying, via the displays (460) of the wearable device(101), the mirror screen (520) corresponding to the first screen (510);
identify an approach to the electronic device (102) by another user (601) different from the user (501) while the mirror screen is displayed via the displays (460); and
based on identifying the approach of the another user (601), display, via the displays (460), a user interface (UI) for querying whether to allow the another user (601) to use the electronic device (102).

15. The wearable device of claim 14, wherein the instructions, when executed by the at least one processor (420) individually or collectively, cause the wearable device (101) to:
after displaying the UI, based on receiving a user input not to allow that the another user(601) to use the electronic device (102), transmit, to the electronic device (102) via the communication circuitry (490), a response such that the electronic device (102) displays another screen indicating that the user(501) is using the electronic device (102).
